# EUROPÄISCHE PATENTSCHRIFT

(11) **EP 1 574 031 B1**
(45) Veröffentlichungstag und Bekanntmachung des Hinweises auf die Patenterteilung: **12.02.2014**
(21) Anmeldenummer: 03785899.0
(22) Anmeldetag: 19.12.2003
(51) Int. Cl.: H04M 3/53, H04M 3/533, H04M 3/537

(54) **MULTIMEDIANACHRICHTENZENTRUM UND TELEKOMMUNIKATIONSGERÄT ZUM ZUGREIFEN AUF HINTERLEGTE MULTIMEDIANACHRICHTEN**
MULTIMEDIA MESSAGE SERVICE CENTER AND TELECOMMUNICATION DEVICE FOR ACCESSING DEPOSITED MULTIMEDIA MESSAGES
CENTRE DE MESSAGES MULTIMEDIA ET APPAREIL DE TELECOMMUNICATION DESTINES A L'ACCES A DES MESSAGES MULTIMEDIA ENREGISTRES

(30) Priorität: 19.12.2002 DE 10259753
(43) Veröffentlichungstag der Anmeldung: 14.09.2005
(73) Patentinhaber: Gigaset Communications GmbH, 81379 München (DE)
(72) Erfinder: GOERTZ, Werner, 46282 Dorsten (DE); LANG, Marco, 46399 Bocholt (DE); NIEDER, Stefan, 46419 Isselburg (DE); RATERMANN, Albert, 58452 Witten (DE); SCHULTE, Thomas, 46399 Bocholt (DE); VAN DE LOGT, Marco, 47574 Goch (DE)
(74) Vertreter: Michalski Hüttermann & Partner Patentanwälte
(86) Internationale Anmeldenummer: PCT/EP2003/014639
(87) Internationale Veröffentlichungsnummer: WO 2004/057851

(56) Entgegenhaltungen:
- EP-A- 1 014 630
- US-A- 4 612 416
- 3GPP: "3rd Generation Partnership Project;Technical Specification Group Terminals; Multimedia Messaging Service (MMS); Functionl description; Stage 2 (Release 4)" 3GPP TS 23.140 V4.2.0, XX, XX, März 2001 (2001-03), Seiten 1-73, XP002238091
- FORSTER M: "MULTIMEDIA MESSAGING SERVICE" BRITISH TELECOMMUNICATIONS ENGINEERING, BRITISH TELECOMMUNICATIONS ENGINEERING. LONDON, GB, Bd. 1, Nr. 2, Juli 2002 (2002-07), Seiten 224-226, XP001162371 ISSN: 0262-401X
- "Universal Mobile Telecommunications System (UMTS);Multimedia Messaging Service (MMS), Functional description; Stage 2 (3GPP TS 23.140 version 4.2.0 Release 4)" ETSI TS 123 140 V4.2.0, XX, XX, März 2001 (2001-03), XP002180514

## Beschreibung

Verfahren und Multimedianachrichtenzentrum zum Zustellen einer Multimedianachricht an ein als Multimedianachrichtensenke ausgebildetes Telekommunikationsgerät sowie Telekommunikationsgerät zum Zugreifen auf bei mindestens einer Hinterlegungsstelle eines Multimedianachrichtendienstzentrums hinterlegte Multimedianachrichten

Die vorliegende Erfindung betrifft ein Verfahren zum Zustellen einer Multimedianachricht an ein als Multimedianachrichtensenke ausgebildetes Telekommunikationsgerät gemäß dem Oberbegriff des Patentanspruches 1, ein Multimedianachrichtenzentrum zum Zustellen einer Multimedianachricht an ein als Multimedianachrichtensenke ausgebildetes Telekommunikationsgerät gemäß dem Oberbegriff des Patentanspruches 15 sowie ein Telekommunikationsgerät zum Zugreifen auf bei mindestens einer Hinterlegungsstelle eines Multimedianachrichtendienstzentrums hinterlegte Multimedianachrichten gemäß dem Oberbegriff des Patentanspruches 26.

Das Übertragen (Senden und Empfangen) von Servicenachrichten an ein Telekommunikationsgerät - beispielsweise ein Mobiltelefon (Handy), ein Schnurlostelefon bestehend aus einer Basisstation sowie mindestens einem Mobilteil, ein Festnetztelefon, ein Fax-Gerät, einen Personal Computer etc. - und umgekehrt von dem Telekommunikationsgerät ist ein Kommunikationsdienst, der bezüglich der mit den Nachrichten übertragenen Informationsinhalten, wie z.B. Texte, multimediale Inhalte wie z.B. Audio-/Videodaten (Tonrufe, Bildschirmschoner), Grafiken, Programme etc., zu unterscheiden ist und der zunächst im Mobilfunkbereich Einzug gehalten hat und aufgrund der großen Akzeptanz sich mittlerweile auch nach und nach im Festnetzbereich etabliert. Von der Vielzahl der im Mobilfunknetz angebotenen Dienste - wie z.B. dem "**S**hort **M**essage (**M**essaging) Service (SMS)", dem "**E**nhanced **M**essage (**M**essaging) Service (EMS)", dem "**M**ultimedia **M**essage (**M**essaging) **S**ervice (MMS)", dem "Instant Messaging", der "**O**ver **T**he **A**ir **A**ctivation (OTA)", dem "E-Mail" etc. - scheint im Festnetz wie im Mobilfunkbereich die Entwicklung derzeit dahin zu gehen, dass insbesondere der SMS- und MMS-Kommunikationsdienst eine größere Rolle spielen werden. Während der SMS-Dienst sowohl für den Mobilfunkbereich als auch für den Festnetzbereich bereits standardisiert ist (**für** GSM: ETSI TS 100 942 V7.0.0, Release 1998; **für** ISDN/PSTN: ETSI ES 201 912 V1.1.1, Release 01/2002) gilt für den MMS-Dienst Gleiches nur für den Mobilfunkbereich (vgl.: 3GPP TS 22.140 V4.y.z; stage 1 and 2; Release 4), wohingegen im Festnetzbereich derzeit Standardisierungsaktivitäten laufen (vgl.: ETSI DES/AT-030023 V0.1.0, 11/2003).

Aus der Druckschrift 3GPP TS 23.140 V4.2.0, XX, XX, März 2001 (2001-03), Seiten 1 bis 73, XP-002238091: "3rd Generation Partnership Project; Technical Specification Group Terminals; Multimedia Messaging Service (MMS); Functional description; Stage 2 (Release 4)" ist das Zustellen einer Multimedianachricht an ein Telekommunikationsgerät bekannt, bei dem die Multimedianachricht an ein für die Zustellung der Multimedianachricht an das Telekommunikationsgerät zuständiges, einen "MMS Relay/Server" aufweisendes Multimedianachrichtendienstzentrum übertragen und hinterlegt wird und bei dem das Multimedianachrichtendienstzentrum eine Mitteilungsnachricht, die so genannte "Multimedia Message Notification", an das Telekommunikationsgerät sendet, mit der es das Telekommunikationsgerät über die hinterlegte Multimedianachricht informiert.

Der SMS-Dienst im Fest- und Mobilnetz ist ein Punkt-zu-Punkt-Dienst und zeichnet sich durch eine reine Push-Funktionalität aus - d.h. der Inhalt der Kurznachricht [**S**hort **M**essage (SM)], deren Länge maximal 160 Byte beträgt, wird vom Kurznachrichten-Servicezentrum bzw. Kurznachrichten-Dienstzentrum [Short **M**essage **S**ervice **C**enter (SMSC)] an das Telekommunikationsgerät gesendet und besteht in der Regel aus Textdaten -, wobei der Verbindungsaufbau vom Servicezentrum initiiert wird. Während der SMS-Dienst im Mobilfunkbereich zwischen dem Telekommunikationsgerät und dem Kurznachrichten-Servicezentrum verbindungslos abläuft, indem die Kurznachricht ohne Aufbau einer Nutzkanalverbindung über einen Signalisierungskanal übertragen wird, erfolgt der Ablauf des SMS-Dienstes im Festnetz verbindungsorientiert, indem eine Nutzkanalverbindung zwischen dem Telekommunikationsgerät und dem Kurznachrichten-Servicezentrum hergestellt wird und die Kurznachricht hierüber mittels der Realisierung des Dienstmerkmals "**C**alling **L**ine **I**dentification (CLI)", was als "**C**alling **L**ine **I**dentification **P**resentation (CLIP)" bezeichnet wird, durch ein FSK- und/oder DTMF-Signalisierung (**F**requency **S**hift **K**eying bzw. Dual **T**one **M**ultiple **F**requency) übermittelt wird.

Beim MMS-Dienst, der im Mobilfunknetz wie der SMS-Dienst verbindungslos über einen WAP-Transportweg (Nutzung des **W**ireless **A**pplication **P**rotocol) abgewickelt wird, kommt im Festnetz hingegen ein anderer Mechanismus zum Tragen:
Beim Versand einer Multimedianachricht [**M**ultimedia **M**essage (MM)], deren Größe im Prinzip unbegrenzt, aber derzeit auf ca. 100kByte beschränkt ist und in der z.B. Texte, multimediale Inhalte wie z.B. Audio-/Videodaten (Tonrufe, Bildschirmschoner), Grafiken, Programme etc. kurzum Text-, Audio- und/oder Videodaten enthalten sein können, an das Telekommunikationsgerät wird zunächst wieder verbindungsorientiert eine Mitteilungsnachricht, die sogenannte MMS-Notification, verschickt, die das Telekommunikationsgerät darüber informiert, dass eine Multimedianachricht beim Multimedianachrichten-Servicezentrum bzw. Multimedianachrichten-Dienstzentrum [**M**ultimedia **M**essage **S**ervice **C**enter (MMSC)] vorliegt. Dies geschieht über einen Push-Dienst, wie z.B. den SMS-Dienst. Anschließend muss, im Unterschied zum Empfang einer Kurznachricht, ein weiterer Verbindungsaufbau vom Telekommunikationsgerät zum Multimedianachrichten-Servicezentrum initiiert werden, um den Inhalt der Multimedianachricht zu erhalten.

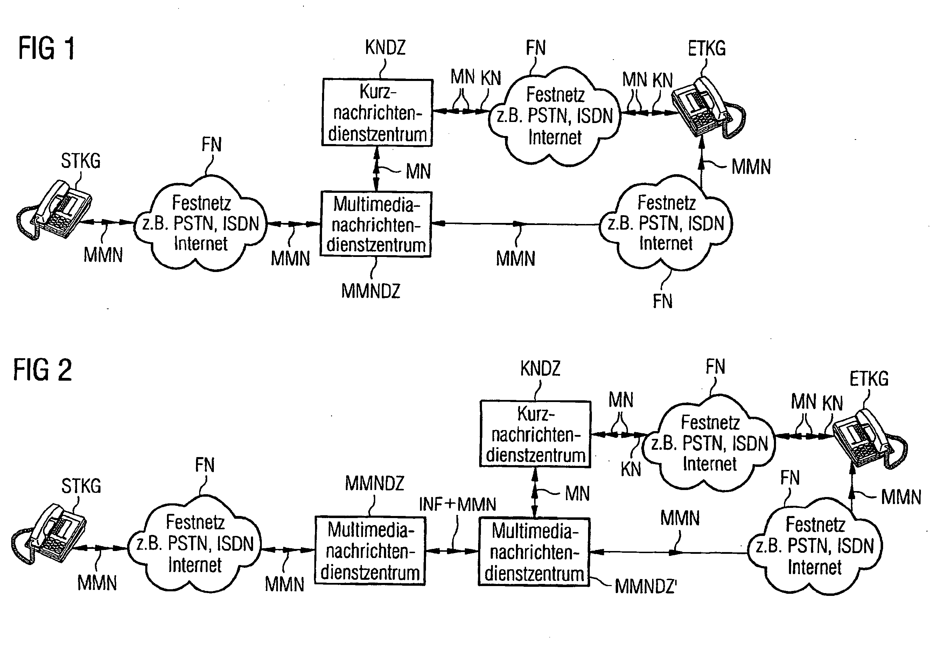

In den FIGUREN 1 und 2 ist dieser Sachverhalt - das Übertragen von Multimedianachrichten (Multimedia Messages MM) im Festnetz von einem Absender (Sendegerät) zu einem Adressaten (Empfangsgerät), bei dem jedes der Geräte üblicherweise bei nur einem einzigen Multimedianachrichtendienstzentrum (Multimedia Message Service Center MMSC) registriert ist, gemäß dem Stand der Technik - dargestellt. Es zeigen:
FIGUR 1 das Übertragen von Multimedianachrichten im Festnetz von einem Absender (Sendegerät) zu einem Adressaten (Empfangsgerät), wenn beide Geräte beim gleichen Multimedianachrichtendienstzentrum registriert sind,
FIGUR 2 das Übertragen von Multimedianachrichten im Festnetz von einem Absender (Sendegerät) zu einem Adressaten (Empfangsgerät), wenn beide Geräte bei unterschiedlichen Multimedianachrichtendienstzentren registriert sind.

FIGUR 1 zeigt die Übertragung einer Multimedianachricht MMN (Multimedia Message MM) im Festnetz FN von einem Sende-Telekommunikationsgerät STKG zu einem Empfangs-Telekommunikationsgerät ETKG, bei dem beide Geräte bei ein und demselben Multimedianachrichtendienstzentrum MMNDZ (Multimedia Message Service Center MMSC) registriert sind, das dem Festnetz FN zugeordnet ist. 'Zugeordnet' bedeutet dabei, dass das Multimedianachrichtendienstzentrum MMNDZ entweder Bestandteil des Festnetzes FN ist oder außerhalb des Festnetzes FN angeordnet ist. Die Registrierung des Sende-Telekommunikationsgerätes STKG bzw. des Empfangs-Telekommunikationsgerätes ETKG bei dem Multimedianachrichtendienstzentrum MMNDZ erfolgt durch das Einprogrammieren einer Empfangs- und Sendenummer des Dienstzentrums in das jeweilige Gerät. Dies geschieht entweder durch eine werksseitige Vorkonfiguration in dem jeweiligen Telekommunikationsgerät oder manuell durch den Benutzer des Gerätes oder durch eine spezielle Konfigurationsnachricht, die ein einziges Mal bei der Erstinbetriebnahme (Installation) des MMS-Dienstes z.B. über den SMS-Dienst von dem Multimedianachrichtendienstzentrum MMNDZ an das Sende-Telekommunikationsgerät STKG bzw. das Empfangs-Telekommunikationsgerät. ETKG übertragen wird und mit der für die Installation des MMS-Dienstes notwendigen Daten dynamisch aufgespielt werden.

Die Übertragung der Multimedianachricht MMN beginnt zunächst damit, dass das Sende-Telekommunikationsgerät STKG die für das Empfangs-Telekommunikationsgerät ETKG bestimmte Multimedianachricht MMN über das Festnetz FN an das Multimedianachrichtendienstzentrum MMNDZ sendet. Um das Empfangs-Telekommunikationsgerät ETKG darüber zu informieren, dass im Multimedianachrichtendienstzentrum MMNDZ die für das Empfangs-Telekommunikationsgerät ETKG bestimmte Multimedianachricht MMN eingetroffen ist, sendet das Multimedianachrichtendienstzentrum MMNDZ eine Mitteilungsnachricht MN an ein Kurznachrichtendienstzentrum KNDZ (Short Message Service Center SMSC), das als Überbringer der Information für das Empfangs-Telekommunikationsgerät ETKG wie das Multimedianachrichtendienstzentrum MMNDZ dem-Festnetz FN zugeordnet ist. Das Kurznachrichtendienstzentrum KNDZ fügt die empfangene Mitteilungsnachricht MN in eine Kurznachricht KN (Short Message SM) ein und sendet diese Kurznachricht KN mit der eingebundenen Mitteilungsnachricht MN in bekannter Weise über das Festnetz FN an das Empfangs-Telekommunikationsgerät ETKG. Hierfür ist es jedoch notwendig, dass das Empfangs-Telekommunikationsgerät ETKG bei dem Kurznachrichtendienstzentrum KNDZ registriert ist. Die Registrierung bei dem Kurznachrichtendienstzentrum KNDZ erfolgt analog zu der Registrierung bei dem Multimedianachrichtendienstzentrum MMNDZ.

Mit dem Erhalt der Mitteilungsnachricht MN baut das Empfangs-Telekommunikationsgerät ETKG über das Festnetz FN eine temporäre Telekommunikationsverbindung oder eine temporäre Internetverbindung gemäß dem TCP/IP-Protokoll zu dem Multimedianachrichtendienstzentrum MMNDZ, bei dem es wie vorstehend erwähnt registriert ist, auf, um die dort hinterlegte Multimedianachricht MMN abzuholen.

Die Tatsache, dass das Empfangs-Telekommunikationsgerät ETKG - wie bereits vorstehend festgehalten - normalerweise jeweils nur an einem einzigen Multimedianachrichtendienstzentrum und Kurznachrichtendienstzentrum registriert ist, bedeutet, dass der Verbindungsaufbau zum Abholen der Multimedianachricht MMN immer nur bei dem im Telekommunikationsgerät jeweils gespeicherten Multimedianachrichtendienstzentrum erfolgen kann.

Die Multimedianachricht selber muss allerdings nicht zwangsläufig immer auf einem Daten-Server (einer Hinterlegungsstelle) des Multimedianachrichtendienstzentrums liegen, bei dem das die Multimedianachricht abholende Telekommunikationsgerät registriert ist, sondern sie kann sich irgendwo anders auf einem x-beliebigen Daten-Server befinden, so z.B. bei einem Daten- Server eines anderen Multimedianachrichtendienstzentrums. Dieser Fall tritt jedes Mal dann auf, wenn das Sende-Telekommunikationsgerät STKG als Absender der Multimedianachricht MMN bei einem anderen Multimedianachrichtendienstzentrum registriert ist. In FIGUR 2 ist dieser Fall dargestellt.

FIGUR 2 zeigt wie FIGUR 1 die Übertragung einer Multimedianachricht MMN (Multimedia Message MM) im Festnetz FN von einem Sende-Telekommunikationsgerät STKG zu einem Empfangs-Telekommunikationsgerät ETKG, bei dem jetzt aber im Unterschied zur FIGUR 1 beide Geräte bei unterschiedlichen Multimedianachrichtendienstzentren MMNDZ, MMNDZ' (Multimedia Message Service Center MMSC) registriert sind, die beide dem Festnetz FN zugeordnet sind. Während das Sende-Telekommunikationsgerät STKG wie in FIGUR 1 beim Multimedianachrichtendienstzentrum MMNDZ registriert ist, ist das Empfangs-Telekommunikationsgerät ETKG bei einem weiteren Multimedianachrichtendienstzentrum MMNDZ' registriert.

'Zugeordnet' bedeutet dabei, dass das Multimedianachrichtendienstzentrum MMNDZ, MMNDZ' entweder Bestandteil des Festnetzes FN ist oder außerhalb des Festnetzes FN angeordnet ist. Die Registrierung des Sende-Telekommunikationsgerätes STKG bzw. des Empfangs-Telekommunikationsgerätes ETKG bei dem Multimedianachrichtendienstzentrum MMNDZ bzw. dem weiteren Multimedianachrichtendienstzentrum MMNDZ' erfolgt durch das Einprogrammieren einer Empfangs- und Sendenummer des Dienstzentrums in das jeweilige Gerät. Dies geschieht wieder dadurch, dass das jeweilige Telekommunikationsgerät entweder werksseitig vorkonfiguriert wird oder durch den Benutzer des Gerätes manuell konfiguriert wird oder durch eine spezielle Konfigurationsnachricht konfiguriert wird, die ein einziges Mal bei der Erstinbetriebnahme (Installation) des MMS-Dienstes z.B. über den SMS-Dienst von dem Multimedianachrichtendienstzentrum MMNDZ an das Sende-Telekommunikationsgerät STKG bzw. von dem weiteren Multimedianachrichtendienstzentrum MMNDZ' an das Empfangs-Telekommunikationsgerät ETKG übertragen wird und mit der jeweils die für die Installation des MMS-Dienstes notwendigen Daten dynamisch aufgespielt werden. Die Übertragung der Multimedianachricht MMN beginnt zunächst wieder damit, dass das Sende-Telekommunikationsgerät STKG die für das Empfangs-Telekommunikationsgerät ETKG bestimmte Multimedianachricht MMN über das Festnetz FN an das Multimedianachrichtendienstzentrum MMNDZ sendet. Das Multimedianachrichtendienstzentrum MMNDZ erkennt jedoch, dass das adressierte Empfangs-Telekommunikationsgerät ETKG nicht bei ihm registriert ist, sondern an dem weiteren Multimedianachrichtendienstzentrum MMNDZ'. Es sendet daraufhin eine Information INF mit der dazugehörigen Multimedianachricht MMN an das weitere Multimedianachrichtendienstzentrum MMNDZ'. Das diese Information und Nachricht empfangende weitere Multimedianachrichtendienstzentrum MMNDZ' sendet danach, um das Empfangs-Telekommunikationsgerät ETKG darüber zu informieren, dass es von dem Multimedianachrichtendienstzentrum MMNDZ die für das Empfangs-Telekommunikationsgerät ETKG bestimmte Multimedianachricht MMN erhalten hat, wieder eine Mitteilungsnachricht MN an ein Kurznachrichtendienstzentrum KNDZ (Short Message Service Center SMSC), das als Überbringer der Information für das Empfangs-Telekommunikationsgerät ETKG wieder wie die beiden Multimedianachrichtendienstzentren MMNDZ, MMDZ' dem Festnetz FN zugeordnet ist. Das Kurznachrichtendienstzentrum KNDZ fügt wieder die empfangene Mitteilungsnachricht MN in eine Kurznachricht KN (Short Message SM) ein und sendet diese Kurznachricht KN mit der eingebundenen Mitteilungsnachricht MN in bekannter Weise über das Festnetz FN an das Empfangs-Telekommunikationsgerät ETKG, das hierzu wieder bei dem Kurznachrichtendienstzentrum KNDZ registriert ist. Die Registrierung bei dem Kurznachrichtendienstzentrum KNDZ erfolgt analog zu der Registrierung bei dem weiteren Multimedianachrichtendienstzentrum MMNDZ".

Mit dem Erhalt der Mitteilungsnachricht MN baut das Empfangs-Telekommunikationsgerät ETKG über das Festnetz FN eine temporäre Telekommunikationsverbindung oder eine temporäre Internetverbindung gemäß dem TCP/IP-Protokoll zu dem weiteren Multimedianachrichtendienstzentrum. MMNDZ', bei dem es wie vorstehend erwähnt registriert ist, auf, um die dort eingetroffene und zum Abholen hinterlegte Multimedianachricht MMN abzuholen.

Die Ausführungen zu FIGUR 2 zeigen, dass die beiden beteiligten Multimedianachrichtendienstzentren über geeignete Mechanismen verfügen, um die Multimedianachricht von einem Dienstzentrum an das andere Dienstzentrum zu übermitteln. Da sich Festnetzbetreiber solcher Dienstzentren oftmals in Konkurrenzsituationen befinden oder vielleicht sogar im Ausland liegen, bestehen oft entsprechende bilaterale Abkommen zwischen den Betreibern nicht, so dass die Multimedianachricht in einem solchem Fall eventuell gar nicht übertragen werden kann.

Im Mobilfunkbereich wird dieses Problem durch Absprachen zwischen den einzelnen Betreibern von Multimediadienstzentren umgangen.

Beim SMS-Dienst im Festnetzbereich gibt es derzeit in Deutschland die erwähnte Konkurrenzsituation. Zur Lösung des geschilderten Problems werden in den Telekommunikationsgeräten die Nummern von mehreren Kurznachrichtendienstzentren vorgehalten, um auch von bei nicht-angemeldeten Kurznachrichtendienstzentren Kurznachrichten empfangen zu können. Der Empfang einer Kurznachricht ist im allgemeinen allerdings auch kein Problem, da der Verbindungsaufbau immer vom liefernden Kurznachrichtendienstzentrum initiiert wird.

Die der Erfindung zugrundeliegende Aufgabe besteht darin, ein Verfahren und Multimedianachrichtenzentrum zum Zustellen einer Multimedianachricht an ein als Multimedianachrichtensenke ausgebildetes Telekommunikationsgerät sowie ein Telekommunikationsgerät zum Zugreifen auf bei mindestens einer Hinterlegungsstelle eines Multimedianachrichtendienstzentrums hinterlegte Multimedianachrichtenanzugeben, bei dem die in für den Dienst "Multimedia Message Service (MMS)" ausgelegten Netze übertragenen Multimedianachrichten unabhängig von der Kommunikation zwischen den Netzen und der Infrastruktur und Topologie des jeweiligen Netzes von einem beliebigen Absender an einen beliebigen Adressaten zugestellt und von diesem empfangen werden können.

Diese Aufgabe wird ausgehend von dem im Oberbegriff des Anspruchs 1 definierten Verfahren durch die im Kennzeichen des Anspruchs 1 angegebenen Merkmale gelöst.

Diese Aufgabe wird ausgehend von dem im Oberbegriff des Anspruchs 15 definierten Multimedianachrichtenzentrum durch die im Kennzeichen des Anspruchs 15 angegebenen Merkmale gelöst.

Diese Aufgabe wird ausgehend von dem im Oberbegriff des Anspruchs 26 definierten Telekommunikationsgerät durch die im Kennzeichen des Anspruchs 26 angegebenen Merkmale gelöst.

Die der Erfindung zugrundeliegende Idee besteht darin, zusätzlich zu einer von einem Multimedianachrichtenzentrum unmittelbar oder mittelbar - z.B. über ein Kurznachrichtenzentrum und/oder ein weiteres Multimedianachrichtenzentrum - aufgrund einer im Multimedianachrichtenzentrum hinterlegten Multimedianachricht, die für ein Telekommunikationsgerät bestimmt ist, an das Telekommunikationsgerät gesendeten Mitteilungsnachricht eine Einwahlinformation an das Telekommunikationsgerät unmittelbar oder mittelbar - z.B. über ein Kurznachrichtenzentrum und/oder ein weiteres Multimedianachrichtenzentrum - zu senden. Mit dieser Einwahlinformation wird dem Telekommunikationsgerät mitteilt, wo es sich Einwählen muss, um auf die an das Telekommunikationsgerät gerichtete Multimedia-Nachricht zugreifen zu können. Das Telekommunikationsgerät greift daraufhin gemäß der Einwahlinformation auf das Multimedianachrichtendienstzentrum oder auf eine dem Multimedianachrichtendienstzentrum zugeordnete Hinterlegungsstelle zu, um die Multimedianachricht abzuholen.

Hieraus ergeben sich folgende Vorteile:
**(i)** Falls sich der Benutzer im Ausland aufhält, kann die Einwahlnummer eine ausländische Nummer von dem im Ausland zur Verfügung stehenden Multimedianachrichtendienstzentrum sein. Dann wäre die Einwahlnummer eine nationale Nummer, dies könnte dem Benutzer die Gebühren für einen internationalen Ruf ersparen.
**(ii)** Die Multimedianachricht kann beim Absender-Multimedianachrichtendienstzentrum liegen bleiben, bis sie direkt dort abgeholt wird, Dadurch wird die Netzlast reduziert.
**(iii)** Die Verwendung einer Einwahlnummer bietet die Möglichkeit, dass der Betreiber eines Multimedianachrichtendienstzentrum die Auslastung des Multimedianachrichtendienstzentrum steuern kann (vgl.: Weiterbildung gemäß der Ansprüche 10 und 21), z.B. durch eine optionale bzw. alternative Portalnummer.
**(iv)** Die Verwendung einer Einwahlnummer bietet die Möglichkeit, dass die Multimedianachricht nach wie vor am "eigenen" Multimedianachrichtendienstzentrum abgeholt werden kann.
**(v)** Das Erfordernis der Absprache zwischen den einzelnen Betreibern von Multimedianachrichtendienstzentrum entfällt, stattdessen ist nur noch eine Absprache für die Übermittlung der Mitteilungsnachricht notwendig. Dies gilt insbesondere dann, wenn zur Übermittlung der SMS-Dienstes-(vgl.: Weiterbildung gemäß der Ansprüche 3 bis 5, 17 bis 19 und 28, 29) benutzt wird, da der SMS-Dienst in den meisten Ländern schon eingeführt ist.

Gemäß der Weiterbildung der Erfindung in den Ansprüchen 2, 16 und 27 ist es von Vorteil, wenn die Einwahlnummer in die Struktur einer bereits - gemäß dem Standard für die Übertragung von Multimedianachrichten im Festnetz - vorgesehenen Mitteilungsnachricht eingebettet wird. Dies geschieht dadurch, dass die Mitteilungsnachricht, die sogenannte "MMS-Notification" um ein zusätzliches MMS-Informationselement z.B. eine "X-MMS-Dial-In" erweitert wird. Dieses beinhaltet eine eindeutige Kennzeichnung des Multimedianachrichtendienstzentrums gemäß der von 3GPP im MMS-Standard vorgeschlagenen Richtlinien [E-Mail Adressen (RFC 822) oder Multiple Subschriber-ISDN (E.164)]. Das Informationselement ist optional, d.h. es kann von dem Benutzer des Multimedianachrichtendienstzentrums entschieden werden, ob es in die "MMS-Notification" eingefügt wird oder nicht. Ebenso ist die Verwendung der eingesetzten Einwahlnummer optional, d.h. die Multimedianachricht kann auch auf konventionellem Wege abgeholt werden [vgl.: obengenannten Vorteil (iv)]. Dies ist notwendig, um existierende Systeme in ihrer Funktion nicht zu beeinträchtigen.

Gemäß der Weiterbildung der Erfindung in den Ansprüchen 7 bis 9 und 31 bis 33 ist es von Vorteil, wenn die Einwahlnummer im Telekommunikationsgerät gegen unerwünschte Effekte, wie Spam (unerwünschte Daten) oder 0190-Nummern, überprüft wird, indem z.B. in dem Gerät ein Sicherungsprotokoll eingesetzt (ad-hoc Anmeldung), eine Ausschlussliste mit ausgeschlossenen Einwahlinformationen, eine Erlaubnisliste mit erlaubten Einwahlinformationen benutzt oder eine Sonderliste mit allgemeingültigen Regeln für zugelassene Einwahlinformationen oder eine benutzerabhängige Steuerung durchgeführt wird.

Weitere vorteilhafte Weiterbildungen der Erfindung sind in den übrigen abhängigen Ansprüchen angegeben.

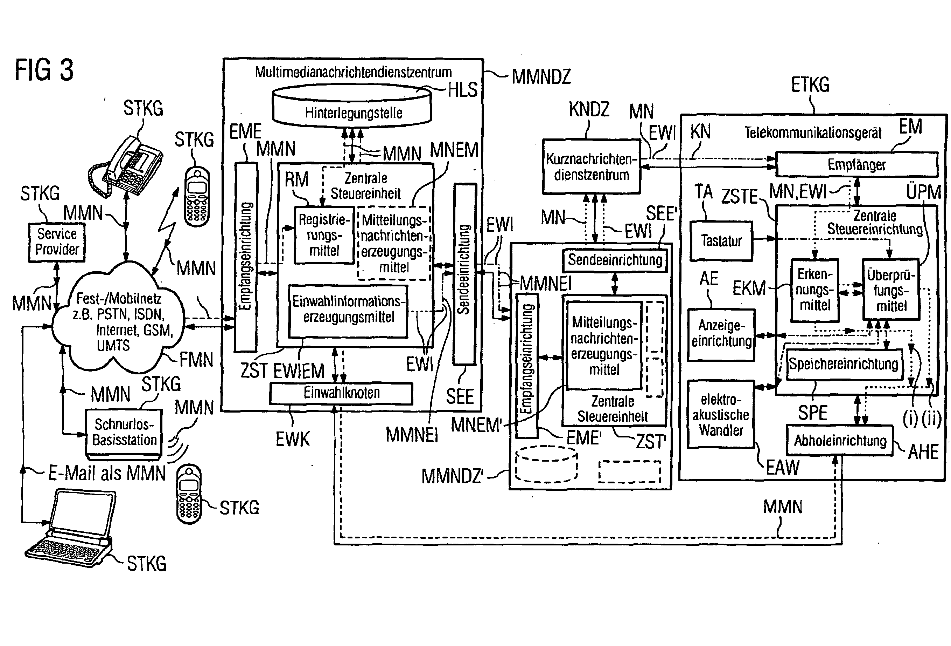

Ein Ausführungsbeispiel der Erfindung wird anhand der FIGUREN 3 bis 5 beschrieben. Es zeigen:
FIGUR 3 das Übertragen von Multimedianachrichten im Fest-/Mobilnetz von einem Absender (Sendegerät) zu einem Adressaten (Empfangsgerät), wenn beide Geräte bei unterschiedlichen Multimedianachrichtendienstzentren registriert sind, unter Beteiligung beider Dienstzentren, wobei Nachrichten-Hinterlegungsstelle und Einwahlknoten des Abhol-Multimedianachrichtendienstzentrums in diesem integriert sind (erstes Übertragungsszenario),

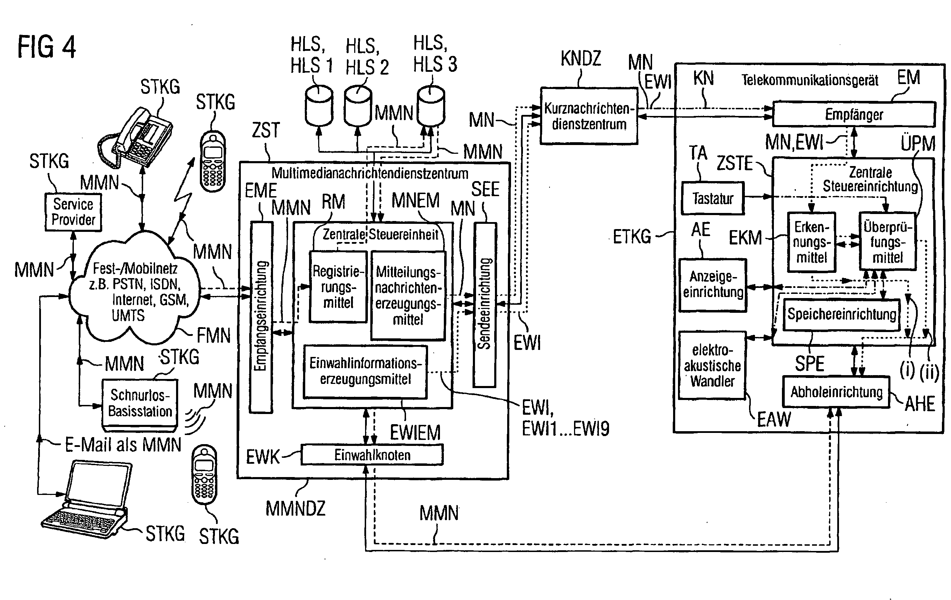

FIGUR 4 das Übertragen von Multimedianachrichten im Fest-/Mobilnetz von einem Absender (Sendegerät) zu einem Adressaten (Empfangsgerät), wenn beide Geräte entweder beim gleichen bei Multimedianachrichtendienstzentrum oder bei unterschiedlichen Multimedianachrichtendienstzentren registriert sind, unter alleiniger Beteiligung des Abhol-Multimedianachrichtendienstzentrums, wobei die Nachrichten-Hinterlegungsstelle außerhalb und der Einwahlknoten innerhalb des Abhol-Multimedianachrichtendienstzentrums angeordnet sind (zweites Übertragungsszenario),

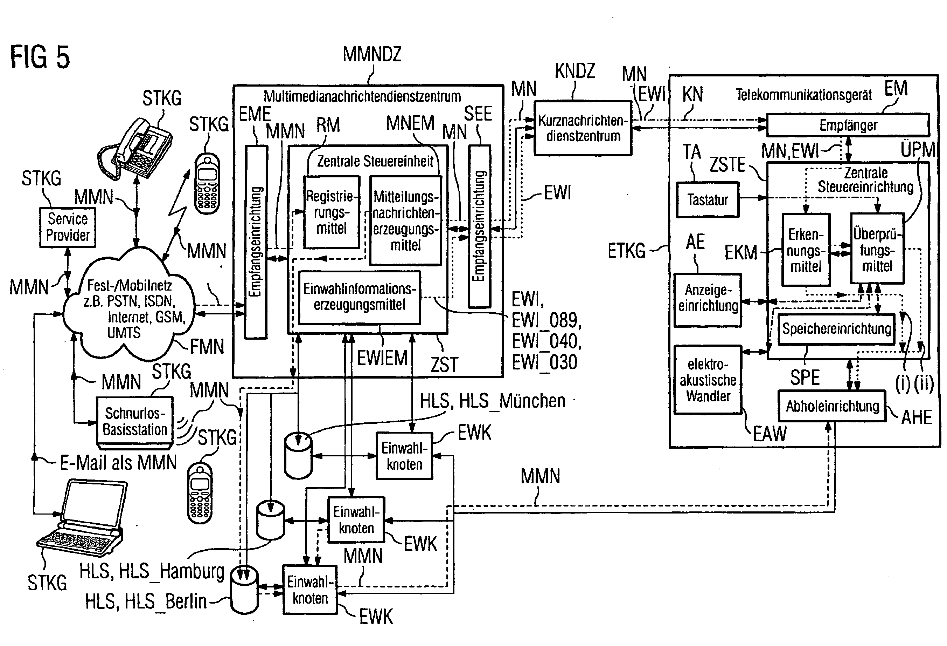

FIGUR 5 das Übertragen von Multimedianachrichten im Fest-/Mobilnetz von einem Absender (Sendegerät) zu einem Adressaten (Empfangsgerät), wenn beide Geräte entweder beim gleichen bei Multimedianachrichtendienstzentrum oder bei unterschiedlichen Multimedianachrichtendienstzentren registriert sind, unter alleiniger Beteiligung des Abhol-Multimedianachrichtendienstzentrums, wobei die Nachrichten-Hinterlegungsstelle und der Einwahlknoten außerhalb des Abhol-Multimedianachrichtendiehstzentrums angeordnet sind (drittes Übertragungsszenario).
FIGUR 3 zeigt als erstes Übertragungsszenario in Anlehnung an die FIGUR 2 die Übertragung einer Multimedianachricht MMN (Multimedia Message MM) in einem Fest-/Mobilnetz FMN von einem Sende-Telekommunikationsgerät STKG zu einem Empfangs-Telekommunikationsgerät ETKG, bei dem wie in der FIGUR 2 beide Geräte bei unterschiedlichen Multimedianachrichtendienstzentren MMNDZ, MMNDZ' (Multimedia Message Service Center MMSC) registriert sind, die beide dem Fest-/Mobilnetz FMN zugeordnet sind. Während das Sende-Telekommunikationsgerät STKG wie in den FIGUREN 1 und 2 bei einem Multimedianachrichtendienstzentrum MMNDZ registriert ist, ist das Empfangs-Telekommunikationsgerät ETKG wie in der FIGUR 2 bei einem weiteren Multimedianachrichtendienstzentrum MMNDZ' registriert.

'Zugeordnet' bedeutet dabei wieder, dass das Multimedianachrichtendienstzentrum MMNDZ, MMNDZ' entweder Bestandteil des Fest-/Mobilnetzes FMN ist oder außerhalb des Fest-/Mobilnetzes FMN angeordnet ist. Die Registrierung des Sende-Telekommunikationsgerätes STKG bzw. des Empfangs-Telekommunikationsgerätes ETKG bei dem Multimedianachrichtendienstzentrum MMNDZ bzw. dem weiteren Multimedianachrichtendienstzentrum MMNDZ' erfolgt wieder durch das Einprogrammieren einer Empfangs- und Sendenummer des Dienstzentrums in das jeweilige Gerät. Dies geschieht wieder dadurch, dass das jeweilige Telekommunikationsgerät entweder werksseitig vorkonfiguriert wird oder durch den Benutzer des Gerätes manuell konfiguriert wird oder durch eine spezielle Konfigurationsnachricht konfiguriert wird, die ein einziges Mal bei der Erstinbetriebnahme (Installation) des MMS-Dienstes z.B. über den SMS-Dienst von dem Multimedianachrichtendienstzentrum MMNDZ an das Sende-Telekommunikationsgerät STKG bzw. von dem weiteren Multimedianachrichtendienstzentrum MMNDZ' an das Empfangs-Telekommunikationsgerät ETKG übertragen wird und mit der jeweils die für die Installation des MMS-Dienstes notwendigen Daten dynamisch aufgespielt werden.

Das Sende-Telekommunikationsgerät STKG kann gemäß der Darstellung in der FIGUR 3 unterschiedlich ausgebildet sein; so z.B. als schnurgebundenes Telefon, als GSM/UMTS-Mobiltelefon, als DECT-Schnurlostelefon bestehend aus einer Schnurlos-Basisstation und mindestens einem Schnurlos-Mobilteil, einem tragbaren Personal Computer (Notebook) oder als Service Provider. Diese Aufzählung ist nicht abschließend, sondern kann beliebig um solche Geräte erweitert werden, die ebenfalls in der Lage sind Multimedianachrichten MMN über das Fest-/Mobilnetz FMN an das Empfangs-Telekommunikationsgerät ETKG zu senden. Dabei spielt es auch keine Rolle, in welcher Form die Multimedianachricht MMN gesendet wird. So ist es beispielsweise neben den bekannten Versandformen auch möglich, dass eine E-Mail als Multimedianachricht MMN verschickt wird.

Die Übertragung der Multimedianachricht MMN beginnt zunächst wieder damit, dass das Sende-Telekommunikationsgerät STKG die für das Empfangs-Telekommunikationsgerät ETKG bestimmte Multimedianachricht MMN über das Fest-/Mobilnetz FMN an das Multimedianachrichtendienstzentrum MMNDZ sendet. Für den Empfang der von dem Sende-Telekommunikationsgerät STKG gesendeten Multimedianachricht MMN weist das Multimedianachrichtendienstzentrum MMNDZ eine Empfangseinrichtung EME auf. Die Empfangseinrichtung EME leitet die empfangene Multimedianachricht MMN weiter an eine Zentrale Steuereinheit ZST des Multimedianachrichtendienstzentrums MMNDZ, die die Bedienungs- und Funktionsabläufe in dem Multimedianachrichtendienstzentrum MMNDZ steuert. In dieser Zentralen Steuereinheit ZST sind vorzugsweise als Software ausgebildete Registrierungsmittel RM enthalten, die die weitergeleitete Multimedianachricht MMN registrieren und zur temporären Zwischenspeicherung an eine mit der Zentralen Steuereinheit ZST verbundenen und in dem Multimedianachrichtendienstzentrum MMNDZ integrierten Hinterlegungsstelle HLS weiterleiten.

Außerdem wird in der Zentralen Steuereinheit ZST des Multimedianachrichtendienstzentrums MMNDZ anhand der weitergeleiteten Multimedianachricht MMN untersucht, ob das adressierte Empfangs-Telekommunikationsgerät ETKG bei dem Multimedianachrichtendienstzentrums MMNDZ registriert ist oder nicht. In dem in FIGUR 3 dargestellten Fall stellt die Zentrale Steuereinheit ZST fest, dass das adressierte Empfangs-Telekommunikationsgerät ETKG nicht bei ihm registriert ist, sondern an einem weiteren Multimedianachrichtendienstzentrum MMNDZ'. Dies Untersuchung wird vorzugsweise ebenfalls von den Registrierungsmitteln RM vorgenommen.

Mit der Registrierung und Hinterlegung der Multimedianachricht MMN wird das Empfangs-Telekommunikationsgerät ETKG von der Zentralen Steuereinheit ZST des Multimedianachrichtendienstzentrums MMNDZ darüber informiert, dass im Multimedianachrichtendienstzentrums MMNDZ eine für das Empfangs-Telekommunikationsgerät ETKG bestimmte Multimedianachricht zur Abholung hinterlegt ist. Zu diesem Zweck weist die Zentrale Steuereinheit ZST neben den Registrierungsmitteln RM noch ebenfalls vorzugsweise als Software ausgebildete Mittel zur Erzeugung von Einwahlinformationen EWIEM auf. Die Einwahlinformationserzeugungsmittel EWIEM erzeugen eine Einwahlinformation EWI, mit der dem Empfangs-Telekommunikationsgerät ETKG mitgeteilt wird, wo es sich Einwählen muss, um auf die hinterlegte Multimedianachricht MMN zugreifen und diese abholen zu können. Die Zentrale Steuereinheit ZST des Multimedianachrichtendienstzentrums MMNDZ enthält außerdem noch Mitteilungsnachrichtenerzeugungsmittel MNEM, die aber für das in FIGUR 3 dargestellte Übertragungsszenario keine Rolle spielen und deshalb nur gestrichelt dargestellt sind.

Da das Empfangs-Telekommunikationsgerät ETKG aber - wie bereits erwähnt - nicht bei dem Multimedianachrichtendienstzentrums MMNDZ registriert ist, kann die erwähnte Mitteilung, wo das Empfangs-Telekommunikationsgerät ETKG sich Einwählen muss, um auf die hinterlegte Multimedianachricht MMN zugreifen und diese abholen zu können, nicht unmittelbar von dem Multimedianachrichtendienstzentrums MMNDZ aus erfolgen, sondern es bedarf hierzu einer Unterstützung. In dem in der FIGUR 3 dargestellten Szenario bietet sich beispielsweise das weitere Multimedianachrichtendienstzentrums MMNDZ' an, das hierzu innerhalb oder außerhalb des Fest-/Mobilnetzes FMN mit dem Multimedianachrichtendienstzentrums MMNDZ verbunden. Um das weitere Multimedianachrichtendienstzentrum MMNDZ' über die beim Multimedianachrichtendienstzentrum MMNDZ eingetroffene, für das Empfangs-Telekommunikationsgerät ETKG bestimmte und hinterlegte Multimedianachricht MMN zu informieren, wird in der Zentralen Steuereinheit ZST eine Multimedianachrichteintreffinformation MMNEI erzeugt, in der die Einwahlinformation EWI eingefügt wird.

Die um die Einwahlinformation EWI erweiterte Multimedianachrichteintreffinformation MMNEI wird von der Zentralen Steuereinheit ZST zu einer Sendeeinrichtung SEE in dem Multimedianachrichtendienstzentrums MMNDZ weitergeleitet und von dort an das weitere Multimedianachrichtendienstzentrum MMNDZ' gesendet.

Das weitere Multimedianachrichtendienstzentrum MMNDZ' das vom Aufbau dem Multimedianachrichtendienstzentrum MMNDZ entspricht weist eine weitere Empfangseinrichtung EME' und eine weitere Sendeeinrichtung SEE', die beide mit einer weiteren Zentralen Steuereinheit ZST', die weitere Mitteilungsnachrichtenerzeugungsmittel MNEM' enthält, verbunden sind. Da die übrigen Einrichtungen - wie die Hinterlegungsstelle und der Einwahlknoten - sowie die übrigen der Zentralen Steuereinheit ZST' zugeordneten Mittel - wie die Registrierungsmittel und die Einwahlinformationserzeugungsmittel - für die weiteren Betrachtungen keine Rolle spielen, ist deren Existenz in der FIGUR 3 lediglich durch eine gestrichelte Darstellung angedeutet.

Die weitere Empfangseinrichtung EME' empfängt die um die Einwahlinformation EWI erweiterte Multimedianachrichteintreffinformation MMNEI und leitet diese an die weitere Zentrale Steuereinheit ZST' weiter. Die Zentrale Steuereinheit ZST' analysiert diese Information, erkennt, das beim Multimedianachrichtendienstzentrum MMNDZ eine für das Empfangs-Telekommunikationsgerät ETKG bestimmte und hinterlegte Multimedianachricht eingetroffen ist, und separiert die übertragene Einwahlinformation EWI. Außerdem wird von den weiteren Mitteilungsnachrichtenerzeugungsmittel MNEM' in der Zentralen Steuereinheit ZST' eine Mitteilungsnachricht MN, die bei der Implementierung des MMS-Dienstes im Festnetz eingeführte MMS-Notification, zur Information des Empfangs-Telekommunikationsgerätes ETKG über das Vorliegen einer für das Empfangs-Telekommunikationsgerät ETKG bestimmten Multimedianachricht generiert.

Sowohl die Mitteilungsnachricht MN als auch die separierte Einwahlinformation EWI werden zur Information des Empfangs-Telekommunikationsgerätes ETKG über das Vorliegen einer für das Empfangs-Telekommunikationsgerät ETKG bestimmten Multimedianachricht an die weitere Sendeeinrichtung SEE' weitergeleitet.

Diese Weiterleitung kann dabei so aussehen, dass die Mitteilungsnachricht MN und die Einwahlinformation entweder getrennt voneinander oder gemeinsam in Form einer einzigen Nachricht weitergegeben werden.

Von den beiden Alternativen ist die Letztere die Vorteilhaftere, weil sich zum einen dadurch der Übermittlungsaufwand in dem Multimedianachrichtendienstzentrum MMNDZ' reduzieren und zum anderen die gemeinsame Weiterleitung durch das Einbetten der Einwahlinformation EWI in die Mitteilungsnachricht MN völlig unproblematisch in eine bestehende durch einen Standard vorgegebene Nachrichtenstruktur der Mitteilungsnachricht MN bzw. der MMS-Notification einfügen lässt.

Das Einfügen in die Nachrichtenstruktur erfolgt vorzugsweise dadurch, dass die Mitteilungsnachricht MN, die sogenannte "MMS-Notification" um ein zusätzliches MMS-Informationselement z.B. eine "X-MMS-Dial-In" erweitert wird, das für die Einwahlinformation zur Verfügung steht.

Die an die Sendeeinrichtung SEE' weitergeleitete Mitteilungsnachricht MN und Einwahlinformation EWI werden von dieser an das Empfangs-Telekommunikationsgerät ETKG übertragen. Diese Übertragung kann unmittelbar, also direkt vom weiteren Multimedianachrichtendienstzentrum MMNDZ' oder mittelbar, also unter Zwischenschaltung mindestens einer weiteren Instanz erfolgen. Für die unmittelbare Übertragung der Mitteilungsnachricht MN und Einwahlinformation EWI müsste zwischen dem Multimedianachrichtendienstzentrum MMNDZ' und dem Empfangs-Telekommunikationsgerät ETKG unabhängig davon, ob das Empfangs-Telekommunikationsgerät ETKG bei dem Multimedianachrichtendienstzentrum MMNDZ' registriert ist oder nicht ein entsprechendes Übertragungsprotokoll definiert und spezifiziert werden, damit das Empfangs-Telekommunikationsgerät ETKG die übertragene Nachricht und Information auch als solche erkennen und interpretieren kann.

Anders sieht es bei der mittelbaren Übertragung aus, bei der für die Übertragung der Mitteilungsnachricht MN und Einwahlinformation EWI in der Regel ein Übertragungsdienst bemüht wird. Wie bereits bei der Beschreibung der FIGUREN 1 und 2 dargelegt, handelt es sich hierbei um den Kurznachrichtendienst oder auch SMS-Dienst mit einem SMS-spezifischen Übertragungsprotokoll. Beim SMS-Dienst wird die Übertragung der an das Telekommunikationsgerät zu übertragenden Nachricht und Information unabhängig davon, ob das Empfangs-Telekommunikationsgerät ETKG bei dem Multimedianachrichtendienstzentrum MMNDZ' registriert ist oder nicht durch ein entsprechendes Kurznachrichtendienstzentrum bewerkstelligt. Es sind für den genannten Zweck aber auch noch andere Dienste vorstellbar.

Für die Übertragung der Mitteilungsnachricht MN und Einwahlinformation EWI in FIGUR 3 wird wie in den FIGUREN 1 und 2 wieder der SMS-Dienst herangezogen. Demzufolge sendet die weitere Sendeeinrichtung SEE' die Mitteilungsnachricht MN und die Einwahlinformation EWI an ein Kurznachrichtendienstzentrum KNDZ (Short Message Service Center SMSC), das als Überbringer der Information für das Empfangs-Telekommunikationsgerät ETKG wieder wie die beiden Multimedianachrichtendienstzentren MMNDZ, MMNDZ' dem Fest-/Mobilnetz FMN zugeordnet ist. Das Kurznachrichtendienstzentrum KNDZ fügt die empfangene Mitteilungsnachricht MN und Einwahlinformation EWI in eine als "Short Message Service"-Nachricht ausgebildete Kurznachricht KN (Short Message SM) ein und sendet diese Kurznachricht KN mit der eingebundenen Mitteilungsnachricht MN und Einwahlinformation EWI in bekannter Weise über das Fest-/Mobilnetz FMN an das mit dem Kurznachrichtendienstzentrum KNDZ verbundene Empfangs-Telekommunikationsgerät ETKG, das hierzu wieder bei dem Kurznachrichtendienstzentrum KNDZ registriert ist. Die Registrierung bei dem Kurznachrichtendienstzentrum KNDZ erfolgt analog zu der Registrierung des Empfangs-Telekommunikationsgerätes ETKG bei dem weiteren Multimedianachrichtendienstzentrum MMNDZ' bzw. der Registrierung des Sende-Telekommunikationsgerätes STKG bei dem Multimedianachrichtendienstzentrum MMNDZ.

Statt die Mitteilungsnachricht MN und Einwahlinformation EWI unmittelbar in die Kurznachricht KN einzubinden, ist es alternativ auch möglich, dass die Mitteilungsnachricht MN und Einwahlinformation EWI mittelbar in die Kurznachricht KN eingebunden werden, indem zunächst eine Einbindung in einer "Wireless Application Protocol-Push"-Nachricht erfolgt und die "Wireless Application Protocol-Push"-Nachricht anschließend in die Kurznachricht KN eingebunden wird.

Damit die Mitteilungsnachricht MN und Einwahlinformation EWI von dem Empfangs-Telekommunikationsgerät ETKG empfangen werden könne, weist dieses einen Empfänger EM auf, der mit einer Zentralen Steuereinrichtung ZSTE verbunden ist, die die Bedienungs- und Funktionsabläufe in dem Empfangs-Telekommunikationsgerät ETKG steuert. Über diese Verbindung gelangen letztlich die Mitteilungsnachricht MN und Einwahlinformation EWI in die Zentrale Steuereinrichtung ZSTE.

In der Zentralen Steuereinrichtung ZSTE sind vorzugsweise als Software ausgebildete Erkennungsmittel EKM enthalten, die die empfangene und an die Zentrale Steuerungseinrichtung ZSTE weitergeleitete Einwahlinformation EWI erkennen. Nachdem insbesondere die Einwahlinformation EWI erkannt worden ist und damit der Zentralen Steuereinrichtung ZSTE bekannt ist, bei welchem Multimedianachrichtendienstzentrum sich das Empfangs-Telekommunikationsgerät ETKG Einwählen muss, um auf die hinterlegte Multimedianachricht MMN zugreifen und diese abholen zu können, baut das Empfangs-Telekommunikationsgerät ETKG gemäß der Einwahlinformation EWI über das Fest-/Mobilnetz FMN eine temporäre Telekommunikationsverbindung oder eine temporäre Internetverbindung gemäß dem TCP/IP-Protokoll zu dem zu der Einwahlinformation EWI korrespondierenden Multimedianachrichtendienstzentrum, dem Multimedianachrichtendienstzentrum MMNDZ, auf, um die dort eingetroffene und zum Abholen hinterlegte Multimedianachricht MMN abzuholen. Die Einwahlinformation EWI ist demzufolge vorzugsweise eine Telefonnummer. Alternativ kann die Einwahlinformation EWI aber auch andere vergleichbare Einwahldaten beinhalten.

Für dieses Abholen weist das Empfangs-Telekommunikationsgerät ETKG eine Abholeinrichtung AHE zum Abholen von Nachrichten und/oder Informationen auf, die einerseits mit der Zentralen Steuereinrichtung ZSTE und andererseits für die temporäre Telekommunikationsverbindung oder Internetverbindung mit einem Einwahlknoten EWK des Multimedianachrichtendienstzentrum MMNDZ verbunden ist, so dass die Zentrale Steuerungseinrichtung ZSTE mit der erkannten Einwahlinformation EWI gemäß dem Steuerungspfad (i) in der FIGUR 3 über die Abholeinrichtung AHE auf das Multimedianachrichtendienstzentrum MMNDZ zugreifen und die Multimedianachricht abholen kann.

Der Einwahlknoten EWK des Multimedianachrichtendienstzentrum MMNDZ ist mit der Zentralen Steuereinheit ZST verbunden und bildet aus der Sicht des Multimedianachrichtendienstzentrum MMNDZ die Schnittstelle bzw. das Gateway zu dem Empfangs-Telekommunikationsgerät ETKG, über die bzw. das sowohl der Abholwunsch des Empfangs-Telekommunikationsgerätes ETKG als auch die von der Zentralen Steuereinheit ZST veranlasste Ausgabe der Multimedianachricht MMN erfolgt.

Um den Benutzer des Empfangs-Telekommunikationsgerätes ETKG gegen unerwünschte Effekte, wie Spam (unerwünschte Daten), 0190-Nummern etc., zu schützen enthält die Zentrale Steuereinrichtung ZSTE außerdem vorzugsweise als Software ausgebildete Überprüfungsmittel ÜPM. Die Überprüfungsmittel ÜPM bilden mit den Erkennungsmitteln EKM eine Funktionseinheit derart, dass nach dem Erkennen der Einwahlinformation EWI die Einwahlinformation EWI überprüft wird, bevor in Abhängigkeit von der dieser Überprüfung der Zugriff durch die Zentrale Steuerungseinrichtung ZSTE auf das Multimedianachrichtendienstzentrum MMNDZ gemäß dem Steuerungspfad (ii) in der FIGUR 3 erfolgt.

Die Überprüfung durch die Überprüfungsmittel ÜPM findet vorzugsweise gemäß einer Ausschlussliste mit ausgeschlossenen Einwahlinformationen, einer Erlaubnisliste mit erlaubten Einwahlinformationen oder eine Sonderliste mit allgemeingültigen Regeln für zugelassene Einwahlinformationen statt. Die Zentrale Steuereinrichtung ZSTE weist hierzu eine Speichereinrichtung SPE auf, in der die genannten Listen abgelegt sind. Alternativ kann die Speichereinrichtung SPE auch eine separate Einrichtung sein, die mit der Zentralen Steuereinrichtung ZSTE verbunden ist.

Eine andere Möglichkeit der Überprüfung durch die Überprüfungsmittel ÜPM bietet eine benutzerabhängige Steuerung. Die Zentrale Steuerungseinrichtung ZSTE ist hierzu mit einer Tastatur TA, elektroakustischen Wandlern EAW und einer Anzeigeeinrichtung AE verbunden. Über diese Einrichtungen bzw. Komponenten des Telekommunikationsgerätes findet ein Dialog mit dem Benutzer des Telekommunikationsgerätes derart statt, dass dem Benutzer die Einwahlinformation EWI akustisch oder optisch angezeigt wird und dieser dann die angezeigte Einwahlinformation EWI bestätigen muss. Die Bestätigung kann vorzugsweise durch Tastatur- oder Softkeyeingabe, aber auch durch Spracheingabe erfolgen.

Eine weitere Möglichkeit besteht darin, dass in dem Gerät ein Sicherungsprotokoll eingesetzt (ad-hoc Anmeldung) wird.

FIGUR 4 zeigt als zweites übertragungsszenario die Übertragung einer Multimedianachricht MMN (Multimedia Message MM) in einem Fest-/Mobilnetz FMN von einem Sende-Telekommunikationsgerät STKG.zu einem Empfangs-Telekommunikationsgerät ETKG, bei dem beide Geräte entweder wie gemäß dem Szenario in der FIGUR 3 bei unterschiedlichen Multimedianachrichtendienstzentren MMNDZ, MMNDZ' (Multimedia Message Service Center MMSC) oder bei ein und demselben Multimedianachrichtendienstzentrum, z.B. dem Multimedianachrichtendienstzentrum MMNDZ oder dem weiteren Multimedianachrichtendienstzentrum MMNDZ', registriert sind. Das Multimedianachrichtendienstzentrum oder die Multimedianachrichtendienstzentren sind wieder dem Fest-/Mobilnetz FMN zugeordnet. Während das Sende-Telekommunikationsgerät STKG wie in den FIGUREN 1 und 2 bei dem Multimedianachrichtendienstzentrum MMNDZ registriert ist, kann das Empfangs-Telekommunikationsgerät ETKG nun wie in der FIGUR 3 bei dem weiteren Multimedianachrichtendienstzentrum MMNDZ' oder gemäß der Darstellung in der FIGUR 4 wie das Sende-Telekommunikationsgerät STKG bei dem Multimedianachrichtendienstzentrum MMNDZ registriert sein.

'Zugeordnet' bezüglich des Fest-/Mobilnetzes FMN bedeutet wieder, dass das Multimedianachrichtendienstzentrum MMNDZ entweder Bestandteil des Fest-/Mobilnetzes FMN ist oder außerhalb des Fest-/Mobilnetzes FMN angeordnet ist. Die Registrierung des Sende-Telekommunikationsgerätes STKG bzw. des Empfangs-Telekommunikationsgerätes ETKG bei dem Multimedianachrichtendienstzentrum MMNDZ erfolgt wieder durch das Einprogrammieren einer Empfangs- und Sendenummer des Dienstzentrums in das jeweilige Gerät. Dies geschieht wieder dadurch, dass das jeweilige Telekommunikationsgerät entweder werksseitig vorkonfiguriert wird oder durch den Benutzer des Gerätes manuell konfiguriert wird oder durch eine spezielle Konfigurationsnachricht konfiguriert wird, die ein einziges Mal bei der Erstinbetriebnahme (Installation) des MMS-Dienstes z.B. über den SMS-Dienst von dem Multimedianachrichtendienstzentrum MMNDZ an das Sende-Telekommunikationsgerät STKG und an das Empfangs-Telekommunikationsgerät ETKG übertragen wird und mit der jeweils die für die Installation des MMS-Dienstes notwendigen Daten dynamisch aufgespielt werden.

Das Sende-Telekommunikationsgerät STKG kann wieder wie in der FIGUR 3 unterschiedlich ausgebildet sein; so z.B. als schnurgebundenes Telefon, als GSM/UMTS-Mobiltelefon, als DECT-Schnurlostelefon bestehend aus einer Schnurlos-Basisstation und mindestens einem Schnurlos-Mobilteil, einem tragbaren Personal Computer (Notebook) oder als Service Provider. Diese Aufzählung ist nicht abschließend, sondern kann beliebig um solche Geräte erweitert werden, die ebenfalls in der Lage sind Multimedianachrichten MMN über das Fest-/Mobilnetz FMN an das Empfangs-Telekommunikationsgerät ETKG zu senden. Dabei spielt es auch keine Rolle, in welcher Form die Multimedianachricht MMN gesendet wird. So ist es beispielsweise neben den bekannten Versandformen auch möglich, dass eine E-Mail als Multimedianachricht MMN verschickt wird.

Die Übertragung der Multimedianachricht MMN beginnt zunächst wieder damit, dass das Sende-Telekommunikationsgerät STKG die für das Empfangs-Telekommunikationsgerät ETKG bestimmte Multimedianachricht MMN über das Fest-/Mobilnetz FMN an das Multimedianachrichtendienstzentrum MMNDZ sendet. Für den Empfang der von dem Sende-Telekommunikationsgerät STKG gesendeten Multimedianachricht MMN weist das Multimedianachrichtendienstzentrum MMNDZ wider eine Empfangseinrichtung EME auf. Die Empfangseinrichtung EME leitet die empfangene Multimedianachricht MMN wieder weiter an eine Zentrale Steuereinheit ZST des Multimedianachrichtendienstzentrums MMNDZ, die die Bedienungs- und Funktionsabläufe in dem Multimedianachrichtendienstzentrum MMNDZ steuert. In dieser Zentralen Steuereinheit ZST sind wieder vorzugsweise als Software ausgebildete Registrierungsmittel RM enthalten, die die weitergeleitete Multimedianachricht MMN registrieren und zur temporären Zwischenspeicherung an eine von mehreren mit der Zentralen Steuereinheit ZST verbundenen und außerhalb des Multimedianachrichtendienstzentrums MMNDZ angeordneten Hinterlegungsstellen HLS weiterleiten.

Mit der Registrierung und Hinterlegung der Multimedianachricht MMN wird das Empfangs-Telekommunikationsgerät ETKG von der Zentralen Steuereinheit ZST des Multimedianachrichtendienstzentrums MMNDZ darüber informiert, dass im Multimedianachrichtendienstzentrums MMNDZ eine für das Empfangs-Telekommunikationsgerät ETKG bestimmte Multimedianachricht zur Abholung hinterlegt ist. Zu diesem Zweck weist die Zentrale Steuereinheit ZST neben den Registrierungsmitteln RM noch ebenfalls vorzugsweise als Software ausgebildete Mittel zur Erzeugung von Mitteilungsnachrichten MNEM und Mittel zur Erzeugung von Einwahlinformationen EWIEM auf. Die Mitteilungsnachrichtenerzeugungsmittel MNEM erzeugen eine Mitteilungsnachricht MN, die bei der Implementierung.des MMS-Dienstes im Festnetz eingeführte MMS-Notification, zur Information des Empfangs-Telekommunikationsgerätes ETKG über das Vorliegen einer für das Empfangs-Telekommunikationsgerät ETKG bestimmten Multimedianachricht, während die Einwahlinformationserzeugungsmittel EWIEM eine Einwahlinformation EWI erzeugen, mit der dem Empfangs-Telekommunikationsgerät ETKG mitgeteilt wird, wo es sich Einwählen muss, um auf die hinterlegte Multimedianachricht MMN zugreifen und diese abholen zu können.

Sowohl die Mitteilungsnachricht MN als auch die Einwahlinformation EWI werden hierfür von der Zentralen Steuereinheit ZST zu einer Sendeeinrichtung SEE in dem Multimedianachrichtendienstzentrums MMNDZ weitergeleitet.

Diese Weiterleitung kann dabei so aussehen, dass die Mitteilungsnachricht MN und die Einwahlinformation EWI entweder getrennt voneinander oder gemeinsam in Form einer einzigen Nachricht weitergegeben werden.

Von den beiden Alternativen ist die Letztere die Vorteilhaftere, weil sich zum einen dadurch der Übermittlungsaufwand in dem Multimedianachrichtendienstzentrum MMNDZ reduzieren und zum anderen die gemeinsame Weiterleitung durch das Einbetten der Einwahlinformation EWI in die Mitteilungsnachricht MN völlig unproblematisch in eine bestehende durch einen Standard vorgegebene Nachrichtenstruktur der Mitteilungsnachricht MN bzw. der MMS-Notification einfügen lässt.

Das Einfügen in die Nachrichtenstruktur erfolgt wieder vorzugsweise dadurch, dass die Mitteilungsnachricht MN, die sogenannte "MMS-Notification" um ein zusätzliches MMS-Informationselement z.B. eine "X-MMS-Dial-In" erweitert wird, das für die Einwahlinformation zur Verfügung steht.

Die an die Sendeeinrichtung SEE weitergeleitete Mitteilungsnachricht MN und Einwahlinformation EWI werden von dieser an das Empfangs-Telekommunikationsgerät ETKG übertragen. Diese Übertragung kann unmittelbar, also direkt vom Multimedianachrichtendienstzentrum MMNDZ oder mittelbar, also unter Zwischenschaltung mindestens einer weiteren Instanz erfolgen. Für die unmittelbare Übertragung der Mitteilungsnachricht MN und Einwahlinformation EWI müsste zwischen dem Multimedianachrichtendienstzentrum MMNDZ und dem Empfangs-Telekommunikationsgerät ETKG unabhängig davon, ob das Empfangs-Telekommunikationsgerät ETKG bei dem Multimedianachrichtendienstzentrum MMNDZ registriert ist oder nicht ein entsprechendes Übertragungsprotokoll definiert und spezifiziert werden, damit das Empfangs-Telekommunikationsgerät ETKG die übertragene Nachricht und Information auch als solche erkennen und interpretieren kann.

Anders sieht es bei der mittelbaren Übertragung aus, bei der für die Übertragung der Mitteilungsnachricht MN und Einwahlinformation EWI in der Regel ein Übertragungsdienst bemüht wird. Wie bereits bei der Beschreibung der FIGUREN 1 und 2 dargelegt, handelt es sich hierbei um den Kurznachrichtendienst oder auch SMS-Dienst mit einem SMS-spezifischen Übertragungsprotokoll. Beim SMS-Dienst wird die Übertragung der an das Telekommunikationsgerät zu übertragenden Nachricht und Information unabhängig davon, ob das Empfangs-Telekommunikationsgerät ETKG bei dem Multimedianachrichtendienstzentrum MMNDZ registriert ist oder nicht durch ein entsprechendes Kurznachrichtendienstzentrum bewerkstelligt. Es sind für den genannten Zweck aber auch noch andere Dienste vorstellbar.

Für die Übertragung der Mitteilungsnachricht MN und Einwahlinformation EWI in der FIGUR 4 wird wie in den FIGUREN 1 bis 3 wieder der SMS-Dienst herangezogen. Demzufolge sendet die weitere Sendeeinrichtung SEE die Mitteilungsnachricht MN und die Einwahlinformation EWI an ein Kurznachrichtendienstzentrum KNDZ (Short Message Service Center SMSC), das als Überbringer der Information für das Empfangs-Telekommunikationsgerät ETKG wieder wie die das Multimedianachrichtendienstzentrum MMNDZ dem Fest-/Mobilnetz FMN zugeordnet ist. Das Kurznachrichtendienstzentrum KNDZ fügt die empfangene Mitteilungsnachricht MN und Einwahlinformation EWI in eine als "Short Message Service"-Nachricht ausgebildete Kurznachricht KN (Short Message SM) ein und sendet diese Kurznachricht KN mit der eingebundenen Mitteilungsnachricht MN und Einwahlinformation EWI in bekannter Weise über das Fest-/Mobilnetz FMN an das mit dem Kurznachrichtendienstzentrum KNDZ verbundene Empfangs-Telekommunikationsgerät ETKG, das hierzu wieder bei dem Kurznachrichtendienstzentrum KNDZ registriert ist. Die Registrierung bei dem Kurznachrichtendienstzentrum KNDZ erfolgt analog zu der Registrierung des Empfangs-Telekommunikationsgerätes ETKG und des Sende-Telekommunikationsgerätes STKG bei dem Multimedianachrichtendienstzentrum MMNDZ.

Statt die Mitteilungsnachricht MN und Einwahlinformation EWI unmittelbar in die Kurznachricht KN einzubinden, ist es alternativ auch möglich, dass die Mitteilungsnachricht MN und Einwahlinformation EWI mittelbar in die Kurznachricht KN eingebunden werden, indem zunächst eine Einbindung in einer "Wireless Application Protocol-Push"-Nachricht erfolgt und die "Wireless Application Protocol-Push"-Nachricht anschließend in die Kurznachricht KN eingebunden wird.

Damit die Mitteilungsnachricht MN und Einwahlinformation EWI von dem Empfangs-Telekommunikationsgerät ETKG empfangen werden könne, weist dieses wieder einen Empfänger EM auf, der mit einer Zentralen Steuereinrichtung ZSTE verbunden ist, die wieder die Bedienungs- und Funktionsabläufe in dem Empfangs-Telekommunikationsgerät ETKG steuert. Über diese Verbindung gelangen letztlich die Mitteilungsnachricht MN und Einwahlinformation EWI in die Zentrale Steuereinrichtung ZSTE.

In der Zentralen Steuereinrichtung ZSTE sind wieder vorzugsweise als Software ausgebildete Erkennungsmittel EKM enthalten, die die empfangene und an die Zentrale Steuerungseinrichtung ZSTE weitergeleitete Einwahlinformation EWI erkennen. Nachdem insbesondere die Einwahlinformation EWI erkannt worden ist und damit der Zentralen Steuereinrichtung ZSTE bekannt ist, bei welchem Multimedianachrichtendienstzentrum sich das Empfangs-Telekommunikationsgerät ETKG Einwählen muss, um auf die hinterlegte Multimedianachricht MMN zugreifen und diese abholen zu können, baut das Empfangs-Telekommunikationsgerät ETKG wieder gemäß der Einwahlinformation EWI über das Fest-/Mobilnetz FMN eine temporäre Telekommunikationsverbindung oder eine temporäre Internetverbindung gemäß dem TCP/IP-Protokoll zu dem zu der Einwahlinformation EWI korrespondierenden Multimedianachrichtendienstzentrum, dem Multimedianachrichtendienstzentrum MMNDZ, auf, um die dort eingetroffene und zum Abholen hinterlegte Multimedianachricht MMN abzuholen. Die Einwahlinformation EWI ist demzufolge vorzugsweise wieder eine Telefonnummer. Alternativ kann die Einwahlinformation EWI aber auch wieder andere vergleichbare Einwahldaten beinhalten.

Für dieses Abholen weist das Empfangs-Telekommunikationsgerät ETKG wieder eine Abholeinrichtung AHE zum Abholen von Nachrichten und/oder Informationen auf, die einerseits mit der Zentralen Steuereinrichtung ZSTE und andererseits für die temporäre Telekommunikationsverbindung oder Internetverbindung mit einem Einwahlknoten EWK des Multimedianachrichtendienstzentrum MMNDZ verbunden ist, so dass die Zentrale Steuerungseinrichtung ZSTE mit der erkannten Einwahlinformation EWI gemäß dem Steuerungspfad (i) in der FIGUR 4 über die Abholeinrichtung AHE auf das Multimedianachrichtendienstzentrum MMNDZ zugreifen und die Multimedianachricht abholen kann.

Der Einwahlknoten EWK des Multimedianachrichtendienstzentrum MMNDZ ist wieder mit der Zentralen Steuereinheit ZST verbunden und bildet aus der Sicht des Multimedianachrichtendienstzentrum MMNDZ die Schnittstelle bzw, das Gateway zu dem Empfangs-Telekommunikationsgerät ETKG, über die bzw. das sowohl der Abholwunsch des Empfangs-Telekommunikationsgerätes ETKG als auch die von der Zentralen Steuereinheit ZST veranlasste Ausgabe der Multimedianachricht MMN abgewickelt wird.

Dadurch, dass die Multimedianachricht MMN mit der Einwahlinformation EWI vom Empfangs-Telekommunikationsgerät ETKG beim Multimedianachrichtendienstzentrum MMNDZ abgeholt werden kann und die Zentrale Steuereinheit ZST des Multimedianachrichtendienstzentrums MMNDZ sowohl mit dem Einwahlknoten EWK als auch mit den einzelnen Hinterlegungsstellen HLS verbunden ist, besteht für den Betreiber des Multimedianachrichtendienstzentrum MMNDZ die Möglichkeit, mit der in dem Multimedianachrichtendienstzentrum MMNDZ generierten Einwahlinformation EWI die Auslastung der Hinterlegungsstellen HLS bezüglich der temporären Zwischenspeicherung (Hinterlegung) von Multimedianachrichten zu steuern.

Ein mögliches Steuerungsszenario sieht z.B. so aus, dass die Zentrale Steuereinheit ZST für erste bis dritte Einwahlinformationen EWI1...EWI3 Multimedianachrichten bei einer ersten Hinterlegungsstelle HLS1 ablegt und später wieder abholt, für vierte bis sechste Einwahlinformationen EWI4...EWI6 Multimedianachrichten bei einer zweiten Hinterlegungsstelle HLS2 ablegt und später wieder abholt und für siebte bis neunte Einwahlinformationen EWI7...EWI9 Multimedianachrichten bei einer dritten Hinterlegungsstelle HLS3 ablegt und später wieder abholt. Dies bedeutet jedoch auch, dass der Einwahlknoten EWK sämtliche neun Einwahlinformationen akzeptieren muss und nicht abweisen darf.

Es versteht sich von selbst, dass das vorgestellte Steuerungsszenario einerseits beliebig veränderbar und andererseits bezüglich der Anzahl der Hinterlegungsstellen und Einwahlinformationen auch beliebig erweiterbar ist.

Um den Benutzer des Empfangs-Telekommunikationsgerätes ETKG gegen unerwünschte Effekte, wie Spam (unerwünschte Daten), 0190-Nummern etc., zu schützen enthält die Zentrale Steuereinrichtung ZSTE außerdem wiederum vorzugsweise als Software ausgebildete Überprüfungsmittel ÜPM. Die Überprüfungsmittel ÜPM bilden wieder mit den Erkennungsmitteln EKM eine Funktionseinheit derart, dass nach dem Erkennen der Einwahlinformation EWI die Einwahlinformation EWI überprüft wird, bevor in Abhängigkeit von der dieser Überprüfung der Zugriff durch die Zentrale Steuerungseinrichtung ZSTE auf das Multimedianachrichtendienstzentrum MMNDZ gemäß dem Steuerungspfad (ii) in FIGUR 4 erfolgt.

Die Überprüfung durch die Überprüfungsmittel ÜPM findet wieder vorzugsweise gemäß einer Ausschlussliste mit ausgeschlossenen Einwahlinformationen, einer Erlaubnisliste mit erlaubten Einwahlinformationen oder eine Sonderliste mit allgemeingültigen Regeln für zugelassene Einwahlinformationen statt. Die Zentrale Steuereinrichtung ZSTE weist hierzu wieder eine Speichereinrichtung SPE auf, in der die genannten Listen abgelegt sind. Alternativ kann die Speichereinrichtung SPE auch wieder eine separate Einrichtung sein, die mit der Zentralen Steuereinrichtung ZSTE verbunden ist.

Eine andere Möglichkeit der Überprüfung durch die Überprüfungsmittel ÜPM bietet wieder eine benutzerabhängige Steuerung. Die Zentrale Steuerungseinrichtung ZSTE ist hierzu mit einer Tastatur TA, elektroakustischen Wandlern EAW und einer Anzeigeeinrichtung AE verbunden. Über diese Einrichtungen bzw. Komponenten des Telekommunikationsgerätes findet wieder ein Dialog mit dem Benutzer des Telekommunikationsgerätes derart statt, dass dem Benutzer die Einwahlinformation EWI akustisch oder optisch angezeigt wird und dieser dann die angezeigte Einwahlinformation EWI bestätigen muss. Die Bestätigung kann wieder vorzugsweise durch Tastatur- oder Softkeyeingabe, aber auch durch Spracheingabe erfolgen.

Eine weitere Möglichkeit besteht wiederum darin, dass in dem Gerät ein Sicherungsprotokoll eingesetzt (ad-hoc Anmeldung) wird.

FIGUR 5 zeigt als drittes Übertragungsszenario die Übertragung einer Multimedianachricht MMN (Multimedia Message MM) in einem Fest-/Mobilnetz FMN von einem Sende-Telekommunikationsgerät STKG zu einem Empfangs-Telekommunikationsgerät ETKG, bei dem beide Geräte entweder wie gemäß dem Szenario in FIGUR 3 bei unterschiedlichen Multimedianachrichtendienstzentren MMNDZ, MMNDZ' (Multimedia Message Service Center MMSC) oder bei ein und demselben Multimedianachrichtendienstzentrum, z.B. dem Multimedianachrichtendienstzentrum MMNDZ oder dem weiteren Multimedianachrichtendienstzentrum MMNDZ', registriert sind. Das Multimediänachrichtendienstzentrum oder die Multimedianachrichtendienstzentren sind wieder dem Fest-/Mobilnetz FMN zugeordnet. Während das Sende-Telekommunikationsgerät STKG wie in den FIGUREN 1 und 2 bei dem Multimedianachrichtendienstzentrum MMNDZ registriert ist, kann das Empfangs-Telekommunikationsgerät ETKG nun wie in der FIGUR 3 bei dem weiteren Multimedianachrichtendienstzentrum MMNDZ' oder gemäß der Darstellung in den FIGUREN 4 und 5 wie das Sende-Telekommunikationsgerät STKG bei dem Multimedianachrichtendienstzentrum MMNDZ registriert sein.

Das in der FIGUR 5 dargestellte dritte Übertragungsszenario unterscheidet sich von dem in der FIGUR 4 dargestellten zweiten Übertragungsszenario lediglich dadurch, dass jeder Hinterlegungsstelle HLS jeweils ein Einwahlknoten EWK zugeordnet ist, jeder Einwahlknoten EWK mit der Zentralen Steuereinheit ZST verbunden ist und das die Einwahlknoten EWK wie die Hinterlegungsstellen HLS außerhalb des Multimedianachrichtendienstzentrums MMNDZ angeordnet sind. Aus diesem Grund ist an dieser Stelle auf eine ausführliche Beschreibung der FIGUR 5 verzichtet worden. Die nachfolgenden Ausführungen beziehen sich daher nur auf die genannten Unterschiede zwischen den FIGUREN 4 und 5.

Für das Abholen der bei dem Multimedianachrichtendienstzentrums MMNDZ weist das Empfangs-Telekommunikationsgerät ETKG wieder die Abholeinrichtung AHE zum Abholen von Nachrichten und/oder Informationen auf, die einerseits mit der Zentralen Steuereinrichtung ZSTE des Empfangs-Telekommunikationsgerätes ETKG und andererseits für die temporäre Telekommunikationsverbindung oder Internetverbindung mit jedem Einwahlknoten EWK des Multimedianachrichtendienstzentrum MMNDZ verbunden ist, so dass die Zentrale Steuerungseinrichtung ZSTE mit der erkannten Einwahlinformation EWI gemäß dem Steuerungspfad (i) in der FIGUR 5 über die Abholeinrichtung AHE auf das Multimedianachrichtendienstzentrum MMNDZ zugreifen und die Multimedianachricht abholen kann.

Jeder Einwahlknoten EWK des Multimedianachrichtendienstzentrum MMNDZ ist wie bereits erwähnt mit der Zentralen Steuereinheit ZST verbunden und bildet aus der Sicht des Multimedianachrichtendienstzentrum MMNDZ jeweils eine Schnittstelle bzw. ein Gateway zu dem Empfangs-Telekommunikationsgerät ETKG, über die bzw. das sowohl der Abholwunsch des Empfangs-Telekommunikationsgerätes ETKG als auch die von der Zentralen Steuereinheit ZST veranlasste Ausgabe der Multimedianachricht MMN abgewickelt wird.

Im Unterschied zu dem Szenario in der FIGUR 4 ist es bei dem Szenario gemäß der FIGUR 5 bei entsprechender Ausbildung des jeweiligen Einwahlknotens auch möglich, dass sowohl der Abholwunsch als auch die Ausgabe der Multimedianachricht ohne Einwirkung der Zentralen Steuereinheit ZST (keine Veranlassung durch die Zentrale Steuereinheit ZST) unabhängig von dieser alleine durch den jeweiligen Einwahlknoten EWK abgewickelt wird. Dies bedeutet, dass das Empfangs-Telekommunikationsgerät ETKG mit der Einwahlinformation EWI die Multimedianachricht MMN nicht bei dem Multimedianachrichtendienstzentrum MMNDZ, sondern unmittelbar bei der dem Multimedianachrichtendienstzentrum MMNDZ zugeordneten Hinterlegungsstelle HLS abholt.

Dadurch, dass die Multimedianachricht MMN mit der Einwahlinformation EWI vom Empfangs-Telekommunikationsgerät ETKG beim Multimedianachrichtendienstzentrum MMNDZ oder bei der dem Multimedianachrichtendienstzentrum MMNDZ zugeordneten Hinterlegungsstelle HLS abgeholt werden kann und die Zentrale Steuereinheit ZST des Multimedianachrichtendienstzentrums MMNDZ sowohl mit dem Einwahlknoten EWK als auch mit den einzelnen Hinterlegungsstellen HLS verbunden ist, besteht für den Betreiber des Multimedianachrichtendienstzentrum MMNDZ die Möglichkeit, mit der in dem Multimedianachrichtendienstzentrum MMNDZ generierten Einwahlinformation EWI die Auslastung der Hinterlegungsstellen HLS bezüglich der temporären Zwischenspeicherung (Hinterlegung) von Multimedianachrichten zu steuern.

Ein mögliches Steuerungsszenario sieht z.B. so aus, dass die Zentrale Steuereinheit ZST für erste Einwahlinformationen EWI_089 Multimedianachrichten bei einer ersten Hinterlegungsstelle HLS_München ablegt, für zweite Einwahlinformationen EWI_040 Multimedianachrichten bei einer zweiten Hinterlegungsstelle HLS_Hamburg ablegt und für dritte Einwahlinformationen ENI_030 Multimedianachrichten bei einer dritten Hinterlegungsstelle HLS_Berlin ablegt und dann im weiteren aber feststellen muss, dass die erste Hinterlegungsstelle HLS_München maximal ausgelastet ist und somit keine neue Multimedianachricht mehr aufnehmen kann. Aufgrund der Vergabe der Einwahlinformation EWI in dem Multimedianachrichtendienstzentrum MMNDZ hat der Betreiber des Multimedianachrichtendienstzentrum MMNDZ nunmehr die Möglichkeit auf diese Situation flexibel zu reagieren. Für Multimedianachrichten die er normalerweise bei der ersten Hinterlegungsstelle HLS_München ablegen würde, nun aber wegen der Maximalauslastung von der ersten Hinterlegungsstelle HLS_München hieran gehindert ist, kann er jetzt auf eine andere Hinterlegungsstelle, z.B. die dritte Hinterlegungsstelle HLS_Berlin ausweichen, weil diese noch nicht voll ausgelastet ist. Er vergibt also für diese Multimedianachrichten statt der ersten Einwahlinformation ENI__089 die dritte Einwahlinformation EWI_030. Es versteht sich von selbst, dass das vorgestellte Steuerungsszenario einerseits beliebig veränderbar und andererseits bezüglich der Anzahl der Hinterlegungsstellen und Einwahlinformationen auch beliebig erweiterbar ist.

## Patentansprüche

1. Verfahren zum Zustellen einer Multimedianachricht an ein als Multimedianachrichtensenke ausgebildetes Telekommunikationsgerät, bei dem
a) die Multimedianachricht (MMN) an ein für die Zustellung der Multimedianachricht (MMN) an das Telekommunikationsgerät (ETKG) als Multimedianachrichtenquelle ausgebildetes Multimedianachrichtendienstzentrum (MMNDZ) übertragen und hinterlegt wird,
b) das Multimedianachrichtendienstzentrum (MMNDZ) eine Mitteilungsnachricht (MN) unmittelbar oder mittelbar an das Telekommunikationsgerät (ETKG) sendet, mit der es das Telekommunikationsgerät (ETKG) über die hinterlegte Multimedianachricht (MMN) informiert,
**dadurch gekennzeichnet, dass**
c) das Multimedianachrichtendienstzentrum (MMNDZ) zusätzlich zu der Mitteilungsnachricht (MN) eine Einwahlinformation (EWI) unmittelbar oder mittelbar an das Telekommunikationsgerät (ETKG) sendet, mit der es dem Telekommunikationsgerät (ETKO) mitteilt, wo es sich Einwählen muss, um auf die hinterlegte Multimedianachricht (MMN) zugreifen zu können,
d) das Telekommunikationsgerät (ETKG) gemäß der Einwahlinformation (EWI) auf das Multimedianachrichtendienstzentrum (MMNDZ) oder auf eine dem Multimedianachrichtendienstzentrum (MMNDZ) zugeordnete, außerhalb dieses Multimedianachrichtendienstzentrums (MMNDZ) angeordnete Hinterlegungstelle (HLS) zugreift, um die Multimedianachricht (MMN) abzuholen,
Wobei der Zugriff auf das Multimedianachrichtendienstzentrum (MMNDZ) oder auf die dem Multimedianachrichtendienstzentrum (MMNDZ) zugeordnete Hinterlegungsstelle (HLS) gemäß der Einwahlinformation (EWI) über einen außerhalb des Multimedianachrichtendienstzentrums (MMNDZ) angeordneten Einwahlknoten (EWK) erfolgr.

2. Verfahren nach Anspruch 1, **dadurch gekennzeichnet, dass** die Einwahlinformation (EWI) in die Mitteilungsnachricht (MN) eingefügt wird.

3. Verfahren nach Anspruch 1 oder 2, **dadurch gekennzeichnet, dass** die Mitteilungsnachricht (MN) in eine als "Short Message Service"-Nachricht ausgebildete Kurznachricht (KN) eingefügt wird, wobei die Kurznachricht (KN) auf Anweisung des Multimedianachrichtendienstzentrum (MMNDZ) von einem Kurznachrichtendienstzentrum (KNDZ) an das Telekommunikationsgerät (ETKG) gesendet wird.

4. Verfahren nach Anspruch 1 oder 2, **dadurch gekennzeichnet, dass** die Mitteilungsnachricht (MN) in einer "Wireless Application Protocol-Push"-Nachricht und die "Wireless Application Prorocol-Push"-Nachricht in eine als "Short Message Scrvice"-Nachricht ausgebildete Kurznachricht CKN) eingefügt werden, wobei die Kurznachricht (KN) auf Anweisung des Multimedianachrichtendienstzentrums (MMNDZ) von einem Kurznachrichtendienstzentrum (KNDZ) an das Telekommunikationsgerät (ETKG) gesendet wird.

5. Verfahren nach Anspruch 3 oder 4, **dadurch gekennzeichnet, dass** das Kurznachrichtendienstzentrum (KNDZ) durch das Multimedianachrichtendienstzentrum (MMNDZ) angewiesen wird, indem die Mitteilungsnachricht (MN) und die Einwahlinformation (EWI) von dem Multimedianachrichtendienstzentrum (MMNDZ) an das Kurznachrichtendienstzentrum (KNDZ) gesendet wird.

6. Verfahren nach einem der Ansprüche 1 bis 5, **dadurch gekennzeichnet, dass** das Multimedianachrichtendienstzentrum (MMNDZ) eine Information (INF) über die in dem Multimedianachrichtendienstzentrum (MMNDZ) hinterlegte Multimedianachricht (MMN) und die Einwahlinformation (EWI) an ein weiteres Multimedianachrichtendienstzentrum (MMNDZ) überträgt, wobei das weitere Multimedianachrichtendienstzentrum (MMNDZ) aufgrund der übertragenen Informationen (INF) die Mitteilungsnachricht (MN) und die Einwahlinformation (EWI) unmittelbar oder mittelbar an das Telekommunikationsgerät (ETKO) sendet.

7. Verfahren nach Anspruch 1, **dadurch gekennzeichnet, dass**
das Telekommunikationsgerät (ETKG) nach dem Empfangen der von dem Multimedianachrichtendienstzentrum (MMNDZ) gesendeten Einwahlinformation (EWI) die Einwahlinformation (EWI) überprüft, bevor in Abhängigkeit von der dieser Überprüfung der Zugriff erfolgt.

8. VerfahrennachAnspruch 7, **dadurch gekennzeichnet, dass**
die Überprüfung der Einwahlinformation (EWI) automatisch anhand einer Ausschlussliste mit ausgeschlossenen Einwahlinformationen, einer Erlaubnisliste mit erlaubten Einwahlinformationen oder einer Sonderliste mit allgemeingültigen Regeln für zugelassene Einwahlinformationen, insbesondere die 0190- Vorwahlnummer, erfolgt.

9. Verfahren nach Anspruch 7, **dadurch gekennzeichnet, dass**
die Überprüfung der Einwahlinformation (EWI) im Dialog mit dem Benutzer des Telekommunikationsgerätes (ETKG) derart erfolgt, dass diesem die Einwahlinformation (EWI) akustisch oder optisch angezeigt wird und dieser dann die angezeigte Einwahlinformation (EWI) bestätigen muss, bevor der Zugriff erfolgt.

10. Verfahren nach Anspruch 1, **dadurch gekennzeichnet, dass**
das Multimedianachrichtendienstzentrum (MMNDZ) mit der Einwahlinformation (EWI) die Auslastung der Hinterlegungsstelle (HLS) bezüglich der Hinterlegung der Multimedianachrichten steuert.

11. Verfahren nach Anspruch 1, 7, oder 9 **dadurch gekennzeichnet, dass** der Zugriff auf das Multimedianachrichtendienstzentrum (MMNDZ) oder auf die dern Multimedianachrichtendienstzentrum (MMNDZ) zugeordnete Hinterlegungsstelle (HLS) über eine Telekommunikationsverbindung oder über Internetverbindung gemäß dem TCP/IP-Protokoll erfolgt.

12. Verfahren nach Anspruch 1 **dadurch gekennzeichnet, dass**
die Multimedianachricht (MMN), die Mitteilungsnachricht (MN) und die Einwahlinformation (EWI) über ein Festnetz oder ein Mobilnetz übertragen werden.

13. Verfahren nach Anspruch 1 **dadurch gekennzeichnet, dass**
mit der Multimedianachricht (MMN) Audio-, Video- und/oder Textdaten übertragen werden.

14. Multimedianachrichtendienstzentrum zum Zustellen einer Multimedianachricht an ein als Multimedianachrichtensenke ausgebildetes Telekommunikationsgerät, das als Multimedianachrichtenquelle
a) eine Zentrale Steuereinheit (ZST) aufweist, die die Bedienungs- und Funktionsabläufe in dem Multimedianachrichtendienstzentrum (MMNDZ) steuert und der mindestens eine Hinterlegungsstelle (HLS) zum Hinterlegen der Multimedianachrichten zugeordnet ist,
b) eine Empfangseinrichtung (EME) zum Empfangen von Multimedianachrichten aufweist, die die an das Telekommunikationsgerät (ETKG) zuzustellende Multimedianachricht (MMN) empfängt und zu deren Weiterleitung an die Zentrale Steuereinheit (ZST) mit dieser verbunden ist,
c) der Zentralen Steuereinheit (ZST) zugeordnete Registrierungsmittel (RM) aufweist, die die in der Zentralen Steuereinheit (ZST) eingetroffene Multimedianachricht (MMN) bei einer der Hinterlegungsstellen (HLS) speichern,
d) der Zentralen Steuereinheit (ZST) zugeordnete Mittel zur Erzeugung von Mitteilungsnachrichten (MNEM) aufweist, die bezüglich der in der Zentralen Steuereinheit (ZST) eingetroffenen Multimedianachricht (MMN) eine Mitteilungsnachricht (MN) erzeugen,
e) eine Sendeeinrichtung (SEE) zum Senden von Mitteilungsnachrichten aufweist, die mit der Zentralen Steuereinheit (ZST) verbunden ist, über diese Verbindung von der Zentralen Steuereinheit (ZST) die Mitteilungsnachricht (MN) erhält und diese unmittelbar oder mittelbar an das Telekommunikationsgerät (ETKG) sendet, um das Telekommunikationsgerät (ETKG) über die hinterlegte Multimedianachricht (MMN) zu informieren,
**dadurch gekennzeichnet, dass**
f) der Zentralen Steuereinheit (ZST) zugeordnete Mittel zur Erzeugung von Einwahlinformationen (EWIEM) vorhanden sind, die zusätzlich zu der erzeugten Mitteilungsnachricht (MN) eine Einwahlinformation (EWI) erzeugen, mit der dem Telekommunikationsgerät (ETKG) mitgeteilt werden soll, wo es sich Einwählen muss, um auf die hinterlegte Multimedianachricht (MMN) zugreifen zu können.
g) die Sendeeinrichtung (SEE) zum Senden der Mitteilungsnachrichten derart ausgebildet ist, dass es die über die Verbindung zur der Zentralen Steuereinheit (ZST) erhaltene Einwahlinformation (EWI) zusätlich zu der Mitteilungsnachricht (MN) unmittelbar oder mittelbar an das Telekommunikationsgerät (ETKG) sendet, so dass das Telekommunikationsgerät (ETKG) gemäß der Einwahlinformation (EWI) auf das Multimedianachrichtendienstzentrum (MMNDZ) oder auf die dem Multimedianachrichtendienstzentrum (MMNDZ) zugeordnete, außerhalb dieses Multimedianachrichrendienstzentrums (MMNDZ) angeordnete Hinterlegungsstelle (HLS) zugreifen kann, um die Multimedianachricht (MMN) abzuholen,
wobei der Zentralen Steuereinheit (ZST) und jeder Hinterlegungsstelle (HLS) ein gemeinsamer Einwahlknoten (EWK) oder jeweils ein gemeinsamer Einwahlknoten (EWK) zugeordnet ist, der außerhalb des Multimedianachrichtendienstzentrums (MMNDZ) angeordnet ist und über den der Zugriff des Telekommunikationsgerätes (ETKG) auf das Multimedianachrichtendienstzentrum (MMNDZ) oder auf die dem Multimedianachrichtendienstzentrum (MMNDZ) zugeordnete Hinterlegungsstelle (HLS) gemäß der Einwahlinformation (EWI) erfolgt.

15. Multimedianachrichtendienstzentrum nach Anspruch 14, dadurch gekennzeichet, dass die Mittel zur Erzeugung der Einwahlinformationen (EWIEM) und die Mittel zur Erzeugung der Mitteilungsnachrichten (MNEM) eine Funktionseinheit bildend derart ausgebildet sind, dass die Einwahlinformation (EWI) in die Mittellungsnachricht (MN) eingefügt wird.

16. Multimedianachrichtendienstzentrum nach Anspruch 14 oder 15, **dadurch gekennzeichnet, dass**
die Mitteilungsnachricht (MN) in eine als "Short Message Service"-Nachricht ausgebildete Kurznachricht (KN) eingefügt ist und das Multimedianachrichtendienstzentrum (MMNDZ) mit einem Kurznachrichtendienstzentrum (KNDZ) verbunden ist, so dass die Kurznachricht (KN) auf Anweisung des Multimedianachrichtendienstzentrums (MMNDZ) von einem Kurznachrichtendienstzentrum (KNDZ) an das Telekommunikationsgerät (ETKG) gesendet wird.

17. Multimedianachrichtendienstzentrum nach Anspruch 14 oder 15, **dadurch gekennzeichnet, dass**
die Mitteilungsnachricht (MN) in einer "Wireless Application Protocol-Push"-Nachricht und die "Wireless Application Protocol-Push"-Nachricht in eine als "Short Message Service"-Nachricht ausgebildete Kurznachricht (KN) eingefügt ist und das Multimedianachrichtendienstzentrum (MMNDZ) mit einem Kurznachrichtendienstzentrum (KNDZ) verbunden ist, so dass die Kurznachricht (KN) auf Anweisung des Multimedianachrichtendienstzentrum (MMNDZ) von einem Kurznachrichtendienstzentrum (KNDZ) an das Telekommunikationsgerät (ETKG) gesendet wird.

18. Multimedianachrichtendienstzentrum nach Anspruch 16 oder 17, **dadurch gekennzeichnet, dass**
die Sendeeinrichtung (SEE) und die Zentrale Steuereinheit (ZST) derart ausgebildet sind, dass für die Anweisung des Kurznachrichtendienstzentrums (KNDZ) die Mitteilungsnachricht (MN) und die Einwahlinformation (EWI) an das Kurznachrichtendienstzentrum (KNDZ) gesendet wird.

19. Multimedianachrichtendienstzentrum nach einem der Ansprüche 14 bis 18, **dadurch gekennzeichnet, dass**
die Sendeeinrichtung (SEE) und die Zentrale Steuereinheit (ZST) derart ausgebildet sind dass eine Information (INF) über die in dem Multimedianachrichtendienstzentrum (MMNDZ) hinterlegte Multimedianachricht (MMN) und die Einwahlinformation (EWI) an ein weiteres Multimedianachrichtendienstzentrum (MMNDZ') übertragen wird, wobei das weitere Multimedianachrichtendienstzentrum (MMNDZ') aufgrund der übertragenen Informationen (INF) die Mitteilungsnachricht (MN) und die Einwahlinformation (EWI) unmittelbar oder mittelbar an das Telekommunikationsgerät (ETKG) sendet.

20. Multimedianachrichtendienstzentrum nach Anspruch 14, 18 oder 19, **dadurch gekennzeichnet, dass**
die Zentrale Steuereinheit (ZST) derart ausgebildet ist, dass mit der Einwahlinformation (EWI) die Auslastung der Hinterlegungsstelle (HLS) bezüglich der Hinterlegung der Multimedianachrichten (MMN) steuerbar ist.

21. Multimedianachrichtendienstzentrum nach Anspruch 14, **dadurch gekennzeichnet, dass** das Multimedianachrichtendienstzentrum (MMNDZ) oder auf die dem Multimedianachrichtendienstzentrum (MMNDZ) zugeordnete Hinterlegungsstelle (HLS) über eine Telekommunikationsverbindung oder über Internetverbindung gemäß dem TCP/IP-Protokoll mit dem Telekommunikationsgerät (ETKG) verbunden ist.

22. Multimedianachrichtendienstzentrum nach Anspruch 14, **dadurch gekennzeichnet, dass** das Multimedianachrichtendienstzentrum (MMNDZ) dem Festnetz oder dem Mobilnetz zugeordnet ist.

23. Multimedianachrichtendienstzentrum nach Anspruch 14, **dadurch gekennzeichnet, dass** die Multimedianachricht (MMN) Audio-, Video- und/oder Textdaten aufweist.

24. Telekommunikationsgerät zum Zugreifen auf bei mindestens einer Hinterleggungsstelle (HLS) eines Multimedianachrichtendienstzentrums hinterlegte Multimedianachrichten, das
a) eine Zentrale Steuereinrichtung (ZSTE) zur Steuerung der Bedienungs- und Funktionsabläufe in dem Telekommunikationsgerät (ETKG) aufweist,
b) eine Abholeinrichtung (AHE) zum Abholen von Nachrichten und/oder Informationen aufweist, der mit der Zentralen Steuereinrichtung (ZSTE) verbunden ist
c) einen Empfänger (EM) zum Empfangen einer von dem Multimedianachrichtendienstzentrum (MMNDZ) unmittelbar oder mittelbar an das Telekommunikationsgerät (ETKG) gesendeten Mitteilungsnachricht (MN) aufweist, der mit der Zentralen Steuereinrichtung (ZSTE) verbunden ist und zur Information des Telekommunikationsgeräts (ETKG) über eine in dem Multimedianachrichtendienstzentrum (MMNDZ) für das Telekommunikationsgerät (ETKG) hinterlegte Multimedianachricht (MMN) die Mitteilungsnachricht (MN) an die Zentrale Steuereinrichtung (ZSTE) weiterleitet,
**dadurch gekennzeichnet, dass**
d) der Zentralen Steuerungseinrichtung (ZSTE) zugeordnete Erkennungsmittel (EKM) vorhanden sind, die derart ausgebildet sind, dass eine von dem Empfänger (EM) zusätzlich zu der Mitteilungsnachricht (MN) empfangene und an die Zentrale Steuerungseinrichtung (ZSTE) weitergeleitete Einwahlinformation (EWI) erkannt wird, mit der dem Telekommunikationsgerät (ETKG) mitgeteilt wird, wo es sich Einwählen muss, um auf die hinterlegte Multimedianachricht (MMN) zugreifen zu können,
b) die Abholeinrichtung (AHE) und die Zentrale Steuerungseinrichtung (ZSTE) mit den zugeordneten Erkennungsmitteln (EKM) derart ausgebildet sind, dass die Zentrale Steuerungseinrichtung (ZSTE) mit der erkannten Einwahlinformation (EWI) über die Abholeinrichtung (AHE) auf das Multimedianachrichtendienstzentrum (MMNDZ) oder auf die dem Multimedianachrichtendienstzentrum (MMNDZ) zugeordnete, außerhalb dieses Multimedianachrichtendienstzentrums (MMNDZ) angeordnete Hinterlegungsstelle (HLS) zugreift, um die Multimedianachricht (MMN) abzuholen,
wobei die Zentrale Steuerungseinrichtung (ZSTE) über die Abholeinrichtung (AHE) mit einem außerhalb des Multimedianachrichtendienstzentrums (MMNDZ) angeordneten Einwahlknoten (EWK) verbunden ist, über den der Zugriff auf das Multimedianachrichtendienstzentrum (MMNDZ) oder auf die dem Multimedianachrichtendienstzentrum (MMNDZ) zugeordnete Hinterlegungsstelle (HLS) gemäß der Einwahlinformation (EWI) erfolgt.

25. Telekommunikationsgerät nach Anspruch 24, **dadurch gekennzeichnet, dass** die Einwahlinformation (EWI) in die Mitteilungsnachricht (MN) eingefügt ist.

26. Telekommunikationsgerät nach Anspruch 24 oder 25, **dadurch gekennzeichnet, dass** die Mitteilungsnachricht (MN) in eine als "Short Message Service"-Nachricht ausgebildete Kurznachricht (KN) eingefügt ist und das Telekommunikationsgerät (ETKG) mit einem Kurznachrichtendienstzentrum (KNDZ) verbunden ist, das auf Anweisung des Multimedianachrichtendienstzentrum (MMNDZ) die Kurznachricht (KN) an das Telekommunikationsgerät (ETKG) sendet.

27. Telekommunikationsgerät nach Anspruch 24 oder 25, **dadurch gekennzeichnet, dass** die Mitteilungsnachricht (MN) in einer "Wireless Application Protocol-Push"-Nachricht und die "Wireless Application Protocol-Push"-Nachricht in eine als "Short Message Service"- Nachricht ausgebildete Kurznachricht (KN) eingefügt ist und das Telekommunikationsgerät (ETKG) mit einem Kurznachrichtendienstzentrum (KNDZ) verbunden ist, das auf Anweisung des Multimedianachrichtendienstzentrums (MMNDZ) die Kurznachricht (KN) an das Telekommunikationsgerät (ETKG) sendet.

28. Telekommunikationsgerät nach einem der Ansprüche 24 bis 27, **dadurch gekennzeichnet, dass** das Telekommunikationsgerät (ETKG) mit einem weiteren Multimedianachrichtendienstzentrum (MMNDZ') unmittelbar oder mittelbar verbindbar ist, das auf Anweisung des Multimedianachrichtendienstzentrums (MMNDZ), in dem die Multimedianachricht (MMN) hinterlegt ist, die Mittellungsnachricht (MN) und die Einwahlinformation (EWI) unmittelbar oder mittelbar an das Telekommunikationsgerät (ETKG) sendet.

29. Telekommunikationsgerät nach Anspruch 24, **dadurch gekennzeichnet, dass** der Zentralen Steuerungseinrichtung (ZSTE) zugeordnete Überprüfungsmittel (ÜPM) vorhanden sind, die eine Funktionseinheit mit den Erkennungsmitteln (EKM) bildend derart ausgebildet sind, dass nach dem Erkennen der von dem Multimedianachrichtendienstzentrum (MMNDZ) gesendeten und von dem Empfänger (EM) empfangenen Einwahlinformation (EWI) die Einwahlinformation (EWI) überprüft wird, bevor in Abhängigkeit von der dieser Überprüfung der Zugriff durch die Zentrale Steuerungseinrichtung (ZSTE) erfolgt.

30. Telekommunikationsgerät nach Anspruch 29, **dadurch gekennzeichnet, dass** eine der Zentralen Steuerungseinrichtung (ZSTE) zugeordnete Speichereinrichtung (SPE) vorhanden ist, die eine Funktionseinheit mit den Überprüfungsmitteln (ÜPM) bildet, wobei diese derart ausgebildet ist, dass die Überprüfung der Einwahlinformation (EWI) automatisch anhand einer in der Speichereinrichtung (SPE) abgelegten Ausschlussliste mit ausgeschlossenen Einwahlinformationen, einer in der Speichereinrichtung (SPE) abgelegten Erlaubnisliste mit erlaubten Einwahlinformationen oder einer in der Speichereinrichtung (SPE) abgelegten Sonderliste mit allgemeingültigen Regeln für zugelassene Einwahlinformationen, insbesondere die 0190-Vorwahinummer, erfolgt.

31. Telekommunikationsgerät nach Anspruch 29, **dadurch gekennzeichnet, dass** eine der Zentralen Steuerungseinrichtung (ZSTE) zugeordnete Tastatur (TA), elektroakustische Wandler (EAW) und eine Anzeigeeinrichtung (AE) vorhanden sind, die eine Funktionseinheit mit der Zentralen Steuerungseinrichtung (ZSTE) und den Überprüfungsmitteln (ÜPM) bilden, wobei diese derart ausgebildet ist, dass die Überprüfung der Einwahlinformation (EWI) im Dialog mit dem Benutzer des Telekommunikationsgerätes (ETKG) derart erfolgt, dass diesem die Einwahlinformation (EWI) akustisch oder optisch angezeigt wird und dieser dann die angezeigte Einwahlinformation (EWI) bestätigen muss, bevor der Zugriff durch die zentrale Steuerungseinrichtung (ZSTE) erfolgt.

32. Telekommunikationsgerät nach Anspruch 24, 28, 30 oder 31 **dadurch gekennzeichnet, dass**
die zentrale Steuerungseinrichtung (ZSTE) über die Abholeinrichtung (AHE) und über eine Telekommunikationsverbindung oder über Internetverbindung gemäß dem TCP/IP-Protokoll mit dem Multimedianachrichtendienstzentrum (MMNDZ) oder der dem Multimedianachrichtendienstzentrum (MMNDZ) zugeordneten Hinterlegungsstelle (HLS) verbunden ist, über die der Zugriff erfolgt.

33. Telekommunikationsgerät nach Anspruch 24, **dadurch gekennzeichnet, dass** das Telekommunikationsgerät (ETKG) ein Festnetz- oder ein Mobilfunkgerät, insbesondere ein Schnurlos-Mobilteil, ist.

34. Telekommunikationsgerät nach Anspruch 24, **dadurch gekennzeichnet, dass** die Multimedianachricht (MMN) Audio-, Video- und/oder Textdaten aufweist.

## Claims

1. Method for delivering a multimedia message to a telecommunication device in the form of a multimedia message sink, in which
a) the multimedia message (MMN) is transmitted to a multimedia message service centre (MMNDZ), which is designed to deliver the multimedia message (MMN) to the telecommunication device (ETKG) and is in the form of a multimedia message source, and is stored,
b) the multimedia message service centre (MMNDZ) directly or indirectly transmits a notification message (MN) to the telecommunication device (ETKG), with which it informs the telecommunication device (ETKG) of the stored multimedia message (MMN),
**characterized in that**
c) in addition to the notification message (MN), the multimedia message service centre (MMNDZ) directly or indirectly transmits an item of dial-in information (EWI) to the telecommunication device (ETKG), with which it notifies the telecommunication device (ETKG) of where it must dial in in order to be able to access the stored multimedia message (MMN),
d) the telecommunication device (ETKG) accesses the multimedia message service centre (MMNDZ) or a depository (HLS) assigned to the multimedia message service centre (MMNDZ) and arranged outside this multimedia message service centre (MMNDZ) according to the dial-in information (EWI) in order to fetch the multimedia message (MMN),
the multimedia message service centre (MMNDZ) or the depository (HLS) assigned to the multimedia message service centre (MMNDZ) being accessed according to the dial-in information (EWI) via a dial-in node (EWK) arranged outside the multimedia message service centre (MMNDZ).

2. Method according to Claim 1, **characterized in that** the dial-in information (EWI) is inserted into the notification message (MN).

3. Method according to Claim 1 or 2, **characterized in that**
the notification message (MN) is inserted into a short message (KN) in the form of a "Short Message Service" message, the short message (KN) being transmitted from a short message service centre (KNDZ) to the telecommunication device (ETKG) on the instructions of the multimedia message service centre (MMNDZ).

4. Method according to Claim 1 or 2, **characterized in that**
the notification message (MN) is inserted into a "Wireless Application Protocol Push" message and the "Wireless Application Protocol Push" message is inserted into a short message (KN) in the form of a "Short Message Service" message, the short message (KN) being transmitted from a short message service centre (KNDZ) to the telecommunication device (ETKG) on the instructions of the multimedia message service centre (MMNDZ).

5. Method according to Claim 3 or 4, **characterized in that**
the short message service centre (KNDZ) is instructed by the multimedia message service centre (MMNDZ) by virtue of the notification message (MN) and the dial-in information (EWI) being transmitted from the multimedia message service centre (MMNDZ) to the short message service centre (KNDZ).

6. Method according to one of Claims 1 to 5, **characterized in that**
the multimedia message service centre (MMNDZ) transmits an item of information (INF) relating to the multimedia message (MMN) stored in the multimedia message service centre (MMNDZ) and the dial-in information (EWI) to a further multimedia message service centre (MMNDZ), the further multimedia message service centre (MMNDZ) directly or indirectly transmitting the notification message (MN) and the dial-in information (EWI) to the telecommunication device (ETKG) on the basis of the transmitted information (INF).

7. Method according to Claim 1, **characterized in that** after receiving the dial-in information (EWI) transmitted by the multimedia message service centre (MMNDZ), the telecommunication device (ETKG) checks the dial-in information (EWI) before access is effected on the basis of this check.

8. Method according to Claim 7, **characterized in that** the dial-in information (EWI) is automatically checked using an exclusion list containing excluded dial-in information, a permission list containing permitted dial-in information or a special list containing generally valid rules for permitted dial-in information, in particular the 0190 dialling code.

9. Method according to Claim 7, **characterized in that** the dial-in information (EWI) is checked during the dialogue with the user of the telecommunication device (ETKG) in such a manner that the dial-in information (EWI) is acoustically or optically indicated to the user and the user must then confirm the indicated dial-in information (EWI) before access is effected.

10. Method according to Claim 1, **characterized in that** the multimedia message service centre (MMNDZ) controls the utilization of the depository (HLS) with respect to the storage of the multimedia messages using the dial-in information (EWI).

11. Method according to Claim 1, 7 or 9, **characterized in that**
the multimedia message service centre (MMNDZ) or the depository (HLS) assigned to the multimedia message service centre (MMNDZ) is accessed via a telecommunication connection or an Internet connection according to the TCP/IP protocol.

12. Method according to Claim 1, **characterized in that** the multimedia message (MMN), the notification message (MN) and the dial-in information (EWI) are transmitted via a fixed network or a mobile network.

13. Method according to Claim 1, **characterized in that** audio, video and/or text data are transmitted with the multimedia message (MMN).

14. Multimedia message service centre for delivering a multimedia message to a telecommunication device in the form of a multimedia message sink, which service centre, as a multimedia message source,
a) has a central control unit (ZST) which controls the operating and functional sequences in the multimedia message service centre (MMNDZ) and is assigned to the at least one depository (HLS) for storing the multimedia messages,
b) has a receiving device (EME) for receiving multimedia messages, which receiving device receives the multimedia message (MMN) to be delivered to the telecommunication device (ETKG) and is connected to the central control unit (ZST) in order to forward the message to the latter,
c) has registration means (RM) which are assigned to the central control unit (ZST) and store the multimedia message (MMN) which has arrived in the central control unit (ZST) in one of the depositories (HLS),
d) has means (MNEM) which are assigned to the central control unit (ZST), are intended to generate notification messages and generate a notification message (MN) for the multimedia message (MMN) which has arrived in the central control unit (ZST),
e) has a transmitting device (SEE) for transmitting notification messages, which transmitting device is connected to the central control unit (ZST), receives the notification message (MN) from the central control unit (ZST) via this connection and directly or indirectly transmits the notification message to the telecommunication device (ETKG) in order to inform the telecommunication device (ETKG) of the stored multimedia message (MMN),
**characterized in that**
f) there are means (EWIEM) which are assigned to the central control unit (ZST), are intended to generate dial-in information and, in addition to the notification message (MN) generated, generate an item of dial-in information (EWI) which is intended to be used to notify the telecommunication device (ETKG) of where it must dial in in order to be able to access the stored multimedia message (MMN),
g) the transmitting device (SEE) for transmitting the notification messages is designed in such a manner that it directly or indirectly transmits the dial-in information (EWI) received via the connection to the central control unit (ZST) to the telecommunication device (ETKG) in addition to the notification message (MN), with the result that the telecommunication device (ETKG) can access the multimedia message service centre (MMNDZ) or the depository (HLS) assigned to the multimedia message service centre (MMNDZ) and arranged outside this multimedia message service centre (MMNDZ) according to the dial-in information (EWI) in order to fetch the multimedia message (MMN),
the central control unit (ZST) and each depository (HLS) being assigned a common dial-in node (EWK) or a respective common dial-in node (EWK) which is arranged outside the multimedia message service centre (MMNDZ) and is used by the telecommunication device (ETKG) to access the multimedia message service centre (MMNDZ) or the depository (HLS) assigned to the multimedia message service centre (MMNDZ) according to the dial-in information (EWI).

15. Multimedia message service centre according to Claim 14, **characterized in that**
the means (EWIEM) for generating the dial-in information and the means (MNEM) for generating the notification messages are designed, so as to form a functional unit, in such a manner that the dial-in information (EWI) is inserted into the notification message (MN).

16. Multimedia message service centre according to Claim 14 or 15, **characterized in that**
the notification message (MN) is inserted into a short message (KN) in the form of a "Short Message Service" message and the multimedia message service centre (MMNDZ) is connected to a short message service centre (KNDZ), with the result that the short message (KN) is transmitted from a short message service centre (KNDZ) to the telecommunication device (ETKG) on the instructions of the multimedia message service centre (MMNDZ).

17. Multimedia message service centre according to Claim 14 or 15, **characterized in that**
the notification message (MN) is inserted into a "Wireless Application Protocol Push" message and the "Wireless Application Protocol Push" message is inserted into a short message (KN) in the form of a "Short Message Service" message and the multimedia message service centre (MMNDZ) is connected to a short message service centre (KNDZ), with the result that the short message (KN) is transmitted from a short message service centre (KNDZ) to the telecommunication device (ETKG) on the instructions of the multimedia message service centre (MMNDZ).

18. Multimedia message service centre according to Claim 16 or 17, **characterized in that**
the transmitting device (SEE) and the central control unit (ZST) are designed in such a manner that the notification message (MN) and the dial-in information (EWI) are transmitted to the short message service centre (KNDZ) in order to instruct the short message service centre (KNDZ).

19. Multimedia message service centre according to one of Claims 14 to 18, **characterized in that** the transmitting device (SEE) and the central control unit (ZST) are designed in such a manner that an item of information (INF) relating to the multimedia message (MMN) stored in the multimedia message service centre (MMNDZ) and the dial-in information (EWI) are transmitted to a further multimedia message service centre (MMNDZ'), the further multimedia message service centre (MMNDZ') directly or indirectly transmitting the notification message (MN) and the dial-in information (EWI) to the telecommunication device (ETKG) on the basis of the transmitted information (INF).

20. Multimedia message service centre according to Claim 14, 18 or 19, **characterized in that** the central control unit (ZST) is designed in such a manner that the utilization of the depository (HLS) with respect to the storage of the multimedia messages (MMN) can be controlled using the dial-in information (EWI).

21. Multimedia message service centre according to Claim 14, **characterized in that**
the multimedia message service centre (MMNDZ) or the depository (HLS) assigned to the multimedia message service centre (MMNDZ) is connected to the telecommunication device (ETKG) via a telecommunication connection or an Internet connection according to the TCP/IP protocol.

22. Multimedia message service centre according to Claim 14, **characterized in that**
the multimedia message service centre (MMNDZ) is assigned to the fixed network or the mobile network.

23. Multimedia message service centre according to Claim 14, **characterized in that**
the multimedia message (MMN) has audio, video and/or text data.

24. Telecommunication device for accessing multimedia messages stored in at least one depository (HLS) of a multimedia message service centre, which telecommunication device
a) has a central control device (ZSTE) for controlling the operating and functional sequences in the telecommunication device (ETKG),
b) has a fetching device (AHE) for fetching messages and/or information, which fetching device is connected to the central control device (ZSTE),
c) has a receiver (EM) for receiving a notification message (MN) which is directly or indirectly transmitted from the multimedia message service centre (MMNDZ) to the telecommunication device (ETKG), which receiver is connected to the central control device (ZSTE) and, in order to inform the telecommunication device (ETKG) of a multimedia message (MMN) stored in the multimedia message service centre (MMNDZ) for the telecommunication device (ETKG), forwards the notification message (MN) to the central control device (ZSTE),
**characterized in that**
d) there are detection means (EKM) which are assigned to the central control device (ZSTE) and are designed in such a manner that an item of dial-in information (EWI) received by the receiver (EM) in addition to the notification message (MN) and forwarded to the central control device (ZSTE) is detected and is used to notify the telecommunication device (ETKG) of where it must dial in in order to be able to access the stored multimedia message (MMN),
e) the fetching device (AHE) and the central control device (ZSTE) with the assigned detection means (EKM) are designed in such a manner that the central control device (ZSTE) accesses the multimedia message service centre (MMNDZ) or the depository (HLS) assigned to the multimedia message service centre (MMNDZ) and arranged outside this multimedia message service centre (MMNDZ) using the detected dial-in information (EWI) via the fetching device (AHE) in order to fetch the multimedia message (MMN),
the central control device (ZSTE) being connected, via the fetching device (AHE), to a dial-in node (EWK) which is arranged outside the multimedia message service centre (MMNDZ) and is used to access the multimedia message service centre (MMNDZ) or the depository (HLS) assigned to the multimedia message service centre (MMNDZ) according to the dial-in information (EWI).

25. Telecommunication device according to Claim 24, **characterized in that**
the dial-in information (EWI) is inserted into the notification message (MN).

26. Telecommunication device according to Claim 24 or 25, **characterized in that**
the notification message (MN) is inserted into a short message (KN) in the form of a "Short Message Service" message and the telecommunication device (ETKG) is connected to a short message service centre (KNDZ) which transmits the short message (KN) to the telecommunication device (ETKG) on the instructions of the multimedia message service centre (MMNDZ).

27. Telecommunication device according to Claim 24 or 25, **characterized in that**
the notification message (MN) is inserted into a "Wireless Application Protocol Push" message and the "Wireless Application Protocol Push" message is inserted into a short message (KN) in the form of a "Short Message Service" message and the telecommunication device (ETKG) is connected to a short message service centre (KNDZ) which transmits the short message (KN) to the telecommunication device (ETKG) on the instructions of the multimedia message service centre (MMNDZ).

28. Telecommunication device according to one of Claims 24 to 27, **characterized in that**
the telecommunication device (ETKG) can be directly or indirectly connected to a further multimedia message service centre (MMNDZ') which directly or indirectly transmits the notification message (MN) and the dial-in information (EWI) to the telecommunication device (ETKG) on the instructions of the multimedia message service centre (MMNDZ) in which the multimedia message (MMN) is stored.

29. Telecommunication device according to Claim 24, **characterized in that**
there are checking means (ÜPM) which are assigned to the central control device (ZSTE) and are designed, so as to form a functional unit with the detection means (EKM), in such a manner that, after the dial-in information (EWI) transmitted by the multimedia message service centre (MMNDZ) and received by the receiver (EM) has been detected, the dial-in information (EWI) is checked before access by the central control device (ZSTE) is effected on the basis of this check.

30. Telecommunication device according to Claim 29, **characterized in that**
there is a storage device (SPE) which is assigned to the central control device (ZSTE) and forms a functional unit with the checking means (ÜPM), said functional unit being designed in such a manner that the dial-in information (EWI) is automatically checked using an exclusion list containing excluded dial-in information which is stored in the storage device (SPE), a permission list containing permitted dial-in information which is stored in the storage device (SPE) or a special list containing generally valid rules for permitted dial-in information, in particular the 0190 dialling code, which is stored in the storage device (SPE).

31. Telecommunication device according to Claim 29, **characterized in that**
a keyboard (TA) assigned to the central control device (ZSTE), electroacoustic transducers (EAW) and an indication device (AE) are present and form a functional unit with the central control device (ZSTE) and the checking means (ÜPM), said functional unit being designed in such a manner that the dial-in information (EWI) is checked during the dialogue with the user of the telecommunication device (ETKG) in such a manner that the dial-in information (EWI) is acoustically or optically indicated to the user and the user must then confirm the indicated dial-in information (EWI) before access by the central control device (ZSTE) is effected.

32. Telecommunication device according to Claim 24, 28, 30 or 31, **characterized in that**
the central control device (ZSTE) is connected, via the fetching device (AHE) and via a telecommunication connection or an Internet connection according to the TCP/IP protocol, to the multimedia message service centre (MMNDZ) or the depository (HLS) assigned to the multimedia message service centre (MMNDZ), via which access is effected.

33. Telecommunication device according to Claim 24, **characterized in that**
the telecommunication device (ETKG) is a fixed network device or a mobile radio device, in particular a cordless mobile part.

34. Telecommunication device according to Claim 24, **characterized in that** the multimedia message (MMN) has audio, video and/or text data.

## Revendications

1. Procédé pour distribuer un message multimédia à un appareil de télécommunication réalisé en tant que collecteur de messages multimédia, dans lequel
a) le message multimédia (MMN) est transmis à un centre de messagerie multimédia (MMNDZ) réalisé en tant que source de messages multimédia pour la distribution du message multimédia (MMN) à l'appareil de télécommunication (ETKG), et y est déposé,
b) le centre de messagerie multimédia (MMNDZ) envoie directement ou indirectement un message de notification (MN) à l'appareil de télécommunication (ETKG) avec lequel il informe l'appareil de télécommunication (ETKG) concernant le message multimédia (MMN) déposé,
**caractérisé en ce que**
c) le centre de messagerie multimédia (MMNDZ) envoie, en plus du message de notification (MN), une information d'entrée en communication (EWI) directement ou indirectement à l'appareil de télécommunication (ETKG), avec laquelle il notifie à l'appareil de télécommunication (ETKG) où il doit entrer en communication afin de pouvoir accéder au message multimédia (MMN) déposé,
d) l'appareil de télécommunication (ETKG) accédant, conformément à l'information d'entrée en communication (EWI), au centre de messagerie multimédia (MMNDZ) ou à un emplacement de dépôt (HLS) associé au centre de messagerie multimédia (MMNDZ) et disposé en-dehors de ce centre de messagerie multimédia (MMNDZ), afin de récupérer le message multimédia (MMN),
l'accès au centre de messagerie multimédia (MMNDZ) ou à l'emplacement de dépôt (HLS) associé au centre de messagerie multimédia (MMNDZ) s'effectuant conformément à l'information d'entrée en communication (EWI) via un noeud d'entrée en communication (EWK) disposé en-dehors du centre de messagerie multimédia (MMNDZ).

2. Procédé selon la revendication 1, **caractérisé en ce que** l'information d'entrée en communication (EWI) est insérée dans le message de notification (MN).

3. Procédé selon les revendications 1 ou 2, **caractérisé en ce que** le message de notification (MN) est inséré dans un message court (KN) réalisé en tant que message « Short Message Service », le message court (KN) étant envoyé, sur instruction du centre de messagerie multimédia (MMNDZ), d'un centre de messagerie pour messages courts (KNDZ) à l'appareil de télécommunication (ETKG).

4. Procédé selon les revendications 1 ou 2, **caractérisé en ce que** le message de notification (MN) est inséré dans un message « Wireless Application Protocol-Push » et le message « Wireless Application Protocol-Push » est inséré dans un message court (KN) réalisé en tant que message « Short Message Service », le message court (KN) étant envoyé, sur instruction du centre de messagerie multimédia (MMNDZ), d'un centre de messagerie pour messages courts (KNDZ) à l'appareil de télécommunication (ETKG).

5. Procédé selon les revendications 3 ou 4, **caractérisé en ce que** le centre de messagerie pour messages courts (KNDZ) est instruit par le centre de messagerie multimédia (MMNDZ) **en ce que** le message de notification (MN) et l'information d'entrée en communication (EWI) sont envoyés par le centre de messagerie multimédia (MMNDZ) au centre de messagerie pour messages courts (KNDZ).

6. Procédé selon l'une des revendications 1 à 5, **caractérisé en ce que** le centre de messagerie multimédia (MMNDZ) retransmet une information (INF) sur le message multimédia (MMN) déposé dans le centre de messagerie multimédia (MMNDZ) et l'information d'entrée en communication (EWI) à un autre centre de messagerie multimédia (MMNDZ), l'autre centre de messagerie multimédia (MMNDZ) envoyant le message de notification (MN) et l'information d'entrée en communication (EWI) directement ou indirectement à l'appareil de télécommunication (ETKG) sur base des informations transmises (INF).

7. Procédé selon la revendication 1, **caractérisé en ce que** l'appareil de télécommunication (ETKG), après la réception de l'information d'entrée en communication (EWI) envoyée par le centre de messagerie multimédia (MMNDZ), vérifie l'information d'entrée en communication (EWI) avant que l'accès ait lieu en fonction de la vérification de celle-ci.

8. Procédé selon la revendication 7, **caractérisé en ce que** la vérification de l'information d'entrée en communication (EWI) s'effectue automatiquement à l'aide d'une liste d'exclusions avec des informations d'entrée en communication exclues, d'une liste d'autorisations avec des informations d'entrée en communication autorisées ou d'une liste spéciale avec des règles de validité générale pour des informations d'entrée en communication autorisées, en particulier le préfixe 0190.

9. Procédé selon la revendication 7, **caractérisé en ce que** la vérification de l'information d'entrée en communication (EWI) s'effectue en dialogue avec l'utilisateur de l'appareil de télécommunication (ETKG) d'une manière consistant à lui indiquer l'information d'entrée en communication (EWI) de façon acoustique ou optique et à ce que celui-ci doive ensuite confirmer l'information d'entrée en communication (EWI) indiquée avant que l'accès ait lieu.

10. Procédé selon la revendication 1, **caractérisé en ce que** le centre de messagerie multimédia (MMNDZ) commande avec l'information d'entrée en communication (EWI) la charge de l'emplacement de dépôt (HLS) concernant le dépôt des messages multimédia.

11. Procédé selon les revendications 1, 7 ou 9, **caractérisé en ce que** l'accès au centre de messagerie multimédia (MMNDZ) ou à l'emplacement de dépôt (HLS) associé au centre de messagerie multimédia (MMNDZ) s'effectue via une liaison de télécommunication ou via une connexion internet conformément au protocole TCP/IP.

12. Procédé selon la revendication 1, **caractérisé en ce que** le message multimédia (MMN), le message de notification (MN) et l'information d'entrée en communication (EWI) sont transmis via un réseau fixe ou un réseau mobile.

13. Procédé selon la revendication 1, **caractérisé en ce que** des données audio, vidéo et/ou de texte sont transmis avec le message multimédia (MMN).

14. Centre de messagerie multimédia pour distribuer un message multimédia à un appareil de télécommunication réalisé en tant que collecteur de messages multimédia, lequel, en tant que source de messages multimédia,
a) contient une unité de commande centrale (ZST), qui commande les déroulements d'opérations et de fonctions dans le centre de messagerie multimédia (MMNDZ) et à laquelle au moins un emplacement de dépôt (HLS) est associé pour déposer les messages multimédia,
b) contient un dispositif de réception (EME) pour réceptionner des messages multimédia, lequel réceptionne le message multimédia (MMN) à distribuer à l'appareil de télécommunication (ETKG) et pour sa retransmission à l'unité de commande centrale (ZST) est relié à celle-ci,
c) contient des moyens d'enregistrement (RM) associés à l'unité de commande centrale (ZST), lesquels stockent le message multimédia (MMN) arrivé dans l'unité de commande centrale (ZST) à l'un des emplacements de dépôt (HLS),
d) contient des moyens pour la génération de messages de notification (MNEM) associés à l'unité de commande centrale (ZST), lesquels génèrent un message de notification (MN) concernant le message multimédia (MMN) arrivé dans l'unité de commande centrale (ZST),
e) contient un dispositif d'émission (SEE) pour envoyer des messages de notification, lequel est relié avec l'unité de commande centrale (ZST), obtient via cette liaison le message de notification (MN) de la part de l'unité de commande centrale (ZST) et envoie celui-ci directement ou indirectement à l'appareil de télécommunication (ETKG) afin d'informer l'appareil de télécommunication (ETKG) concernant le message multimédia (MMN) déposé,
**caractérisé en ce que**
f) il existe des moyens associés à l'unité de commande centrale (ZST) pour la génération d'informations d'entrée en communication (EWIEM) lesquels génèrent, en plus du message de notification (MN) généré, une information d'entrée en communication (EWI) avec laquelle il faut notifier à l'appareil de télécommunication (ETKG) où il doit entrer en communication afin de pouvoir accéder au message multimédia (MMN) déposé,
g) le dispositif d'émission (SEE) pour envoyer les messages de notification étant réalisé de manière à envoyer l'information d'entrée en communication (EWI) obtenue via la liaison avec l'unité de commande centrale (ZST) en plus du message de notification (MN) de manière directe ou indirecte à l'appareil de télécommunication (ETKG) de façon à ce que l'appareil de télécommunication (ETKG) puisse accéder, conformément à l'information d'entrée en communication (EWI), au centre de messagerie multimédia (MMNDZ) ou à l'emplacement de dépôt (HLS) associé au centre de messagerie multimédia (MMNDZ) et disposé en-dehors de ce centre de messagerie multimédia (MMNDZ), afin de récupérer le message multimédia (MMN), un noeud d'entrée en communication (EWK) commun ou respectivement un noeud d'entrée en communication (EWK) commun étant associé à l'unité de commande centrale (ZST) et à chaque emplacement de dépôt (HLS), lequel noeud est disposé en-dehors du centre de messagerie multimédia (MMNDZ) et par l'intermédiaire duquel s'effectue l'accès de l'appareil de télécommunication (ETKG) au centre de messagerie multimédia (MMNDZ) ou à l'emplacement de dépôt (HLS) associé au centre de messagerie multimédia (MMNDZ) conformément à l'information d'entrée en communication (EWI).

15. Centre de messagerie multimédia selon la revendication 14, **caractérisé en ce que** les moyens pour la génération des informations d'entrée en communication (EWIEM) et les moyens pour la génération des messages de notification (MNEM) sont réalisés, en formant une unité fonctionnelle, de telle manière que l'information d'entrée en communication (EWI) est insérée dans le message de notification (MN).

16. Centre de messagerie multimédia selon la revendication 14 ou 15, **caractérisé en ce que** le message de notification (MN) est inséré dans un message court (KN) réalisé en tant que message « Short Message Service » et **en ce que** le centre de messagerie multimédia (MMNDZ) est relié à un centre de messagerie pour messages courts (KNDZ), de sorte que le message court (KN) est envoyé, sur instruction du centre de messagerie multimédia (MMNDZ), d'un centre de messagerie pour messages courts (KNDZ) à l'appareil de télécommunication (ETKG).

17. Centre de messagerie multimédia selon la revendication 14 ou 15, **caractérisé en ce que** le message de notification (MN) est inséré dans un message « Wireless Application Protocol-Push » et le message « Wireless Application Protocol-Push » est inséré dans un message court (KN) réalisé en tant que message « Short Message Service » et **en ce que** le centre de messagerie multimédia (MMNDZ) est relié à un centre de messagerie pour messages courts (KNDZ), de sorte que le message court (KN) est envoyé, sur instruction du centre de messagerie multimédia (MMNDZ), d'un centre de messagerie multimédia pour messages courts (KNDZ) à l'appareil de télécommunication (ETKG).

18. Centre de messagerie multimédia selon la revendication 16 ou 17, **caractérisé en ce que** le dispositif d'émission (SEE) et l'unité de commande centrale (ZST) sont réalisés de manière à ce que, pour l'instruction du centre de messagerie pour messages courts (KNDZ), le message de notification (MN) et l'information d'entrée en communication (EWI) sont envoyés au centre de messagerie pour messages courts (KNDZ).

19. Centre de messagerie multimédia selon l'une des revendications 14 à 18, **caractérisé en ce que** le dispositif d'émission (SEE) et l'unité de commande centrale (ZST) sont réalisés de manière à ce qu'une information (INF) sur le message multimédia (MMN) déposée dans le centre de messagerie multimédia (MMNDZ) et l'information d'entrée en communication (EWI) soient transmises à un autre centre de messagerie multimédia (MMNDZ'), l'autre centre de messagerie multimédia (MMNDZ') envoyant, sur la base des informations (INF) transmises, le message de notification (MN) et l'information d'entrée en communication (EWI) directement ou indirectement à l'appareil de télécommunication (ETKG).

20. Centre de messagerie multimédia selon la revendication 14, 18 ou 19, **caractérisé en ce que** l'unité de commande centrale (ZST) est réalisée de manière à qu'il soit possible de commander, avec l'information d'entrée en communication (EWI), la charge de l'emplacement de dépôt (HLS) concernant le dépôt des messages multimédia (MMN).

21. Centre de messagerie multimédia selon la revendication 14, **caractérisé en ce que** le centre de messagerie multimédia (MMNDZ) ou l'emplacement de dépôt (HLS) associé au centre de messagerie multimédia (MMNDZ) est relié, via une liaison de télécommunication ou via une connexion internet conformément au protocole TCP/IP, à l'appareil de télécommunication (ETKG).

22. Centre de messagerie multimédia selon la revendication 14, **caractérisé en ce que** le centre de messagerie multimédia (MMNDZ) est associé au réseau fixe ou au réseau mobile.

23. Centre de messagerie multimédia selon la revendication 14, **caractérisé en ce que** le message multimédia (MMN) contient des données audio, vidéo et/ou de texte.

24. Appareil de télécommunication pour accéder à des messages multimédia déposés à au moins un emplacement de dépôt (HLS) d'un centre de messagerie multimédia, lequel
a) contient un dispositif de commande central (ZSTE) pour commander des déroulement d'opérations et de fonctions dans l'appareil de télécommunication (ETKG),
b) contient un dispositif de récupération (AHE) pour récupérer des messages et/ou des informations, lequel est relié au dispositif de commande central (ZSTE),
c) un récepteur (EM) pour réceptionner un message de notification (MN) envoyé directement ou indirectement par le centre de messagerie multimédia (MMNDZ) à l'appareil de télécommunication (ETKG), lequel est relié au dispositif de commande central (ZSTE) et retransmet le message de notification (MN) au dispositif de commande central (ZSTE) pour information de l'appareil de télécommunication (ETKG) concernant un message multimédia (MMN) déposé dans le centre de messagerie multimédia (MMNDZ) pour l'appareil de télécommunication (ETKG),
**caractérisé en ce que**
d) il y a des moyens de reconnaissance (EKM) associés au dispositif de commande central (ZSTE), lesquels sont réalisés de manière à ce qu'une information d'entrée en communication (EWI) réceptionnée par le récepteur (EM) en plus du message de notification (MN) et retransmise au dispositif de commande central (ZSTE) soit reconnue, avec laquelle il est notifié à l'appareil de télécommunication (ETKG) où il doit entrer en communication afin de pouvoir accéder au message multimédia (MMN) déposé,
e) le dispositif de récupération (AHE) et le dispositif de commande central (ZSTE) avec les moyens de reconnaissance (EKM) associés étant réalisés de manière à ce que le dispositif de commande central (ZSTE) accède, avec l'information d'entrée en communication (EWI) reconnue, via le dispositif de récupération (AHE), au centre de messagerie multimédia (MMNDZ) ou à l'emplacement de dépôt (HLS) associé au centre de messagerie multimédia (MMNDZ) et disposé en-dehors de ce centre de messagerie multimédia (MMNDZ) afin de récupérer le message multimédia (MMN),
le dispositif de commande central (ZSTE) étant relié via le dispositif de récupération (AHE) à un noeud d'entrée en communication (EWK) disposé en-dehors du centre de messagerie multimédia (MMNDZ) par l'intermédiaire duquel l'accès au centre de messagerie multimédia (MMNDZ) ou à l'emplacement de dépôt (HLS) associé au centre de messagerie multimédia (MMNDZ) s'effectue conformément à l'information d'entrée en communication (EWI).

25. Appareil de télécommunication selon la revendication 24, **caractérisé en ce que** l'information d'entrée en communication (EWI) est insérée dans le message de notification (MN).

26. Appareil de télécommunication selon la revendication 24 ou 25, **caractérisé en ce que** le message de notification (MN) est inséré dans un message court (KN) réalisé en tant que message « Short Message Service » et **en ce que** l'appareil de télécommunication (ETKG) est relié à un centre de messagerie pour messages courts (KNDZ), lequel envoie le message court (KN) à l'appareil de télécommunication (ETKG) sur instruction du centre de messagerie multimédia (MMNDZ).

27. Appareil de télécommunication selon la revendication 24 ou 25, **caractérisé en ce que** le message de notification (MN) est inséré dans un message « Wireless Application Protocole-Push » et le message « Wireless Application Protocole-Push » est inséré dans un message court (KN) réalisé en tant que message « Short Message Service » et **en ce que** l'appareil de télécommunication (ETKG) est relié à un centre de messagerie pour messages courts (KNDZ) lequel envoie le message court (KN) à l'appareil de télécommunication (ETKG) sur instruction du centre de messagerie multimédia (MMNDZ).

28. Appareil de télécommunication selon l'une des revendications 24 à 27, **caractérisé en ce que** l'appareil de télécommunication (ETKG) peut être relié directement ou indirectement à un autre centre de messagerie multimédia (MMNDZ') lequel envoie, sur instruction du centre de messagerie multimédia (MMNDZ), dans lequel le message multimédia (MMN) est déposé, le message de notification (MN) et l'information d'entrée en communication (EWI), directement ou indirectement, à l'appareil de télécommunication (ETKG).

29. Appareil de télécommunication selon la revendication 24, **caractérisé en ce qu'**il existe des moyens de vérification (ÜPM) associés au dispositif de commande central (ZSTE) lesquels sont réalisés, en formant une unité fonctionnelle avec les moyens de reconnaissance (EKM), de manière à ce qu'après la reconnaissance de l'information d'entrée en communication (EWI) envoyée par le centre de messagerie multimédia (MMNDZ) et réceptionnée par le récepteur (EM), l'information d'entrée en communication (EWI) est vérifiée avant que l'accès par le dispositif de commande central (ZSTE) ait lieu en fonction de la vérification de celle-ci.

30. Appareil de télécommunication selon la revendication 29, **caractérisé en ce qu'**il existe un dispositif de stockage (SPE) associé au dispositif de commande central (ZSTE), lequel forme une unité fonctionnelle avec les moyens de vérification (ÜPM), celui-ci étant réalisé de manière à ce que la vérification de l'information d'entrée en communication (EWI) s'effectue automatiquement à l'aide d'une liste d'exclusions avec des informations d'entrée en communication exclues déposée dans le dispositif de stockage (SPE), une liste d'autorisations avec des informations d'entrée en communication autorisées déposée dans le dispositif de stockage (SPE) ou une liste spéciale avec des règles de validité générale pour des informations d'entrée en communication autorisées déposée dans le dispositif de stockage (SPE), en particulier le préfixe 0190.

31. Appareil de télécommunication selon la revendication 29, **caractérisé en ce qu'**il existe un clavier (TA) associé au dispositif de commande central (ZSTE), un convertisseur électroacoustique (EAW) et un dispositif d'affichage (AE), lesquels forment une unité fonctionnelle avec le dispositif de commande central (ZSTE) et les moyens de vérification (ÜPM), celui-ci étant réalisé de manière à ce que la vérification de l'information d'entrée en communication (EWI) s'effectue en dialogue avec l'utilisateur de l'appareil de télécommunication (ETKG) de manière à ce que l'information d'entrée en communication (EWI) lui soit indiquée de façon acoustique ou optique et à ce que celui-ci doive ensuite confirmer l'information d'entrée en communication (EWI) indiquée avant que l'accès par le dispositif de commande central (ZSTE) ait lieu.

32. Appareil de télécommunication selon la revendication 24, 28, 30 ou 31, **caractérisé en ce que** le dispositif de commande central (ZSTE) est relié, via le dispositif de récupération (AHE) et via une liaison de télécommunication ou via une connexion internet conformément au protocole TCP/IP, avec le centre de messagerie multimédia (MMNDZ) ou l'emplacement de dépôt (HLS) associé au centre de messagerie multimédia (MMNDZ) via lequel s'effectue l'accès.

33. Appareil de télécommunication selon la revendication 24, **caractérisé en ce que** l'appareil de télécommunication (ETKG) est un appareil de radiocommunication mobile ou de réseau fixe, en particulier une partie mobile sans fil.

34. Appareil de télécommunication selon la revendication 24, **caractérisé en ce que** le message multimédia (MMN) contient des données audio, vidéo et/ou de texte.
